# EUROPEAN PATENT APPLICATION

(11) **EP 2 326 148 A2**
(43) Date of publication of application: **25.05.2011**
(21) Application number: 10176916.4
(22) Date of filing: 15.09.2010
(51) Int. Cl.: H05B 41/282, H05B 33/08

(54) **Driving device for lighting circuit and illumination device**

(30) Priority: 25.09.2009 JP 2009221500; 26.01.2010 JP 2010014819
(71) Applicant: Panasonic Electric Works Co., Ltd., Kadoma-shi Osaka 571-8686 (JP)
(72) Inventor: Hamamoto, Katunobu, Neyagawa Osaka (JP); Kuroki, Yosifumi, Moriguchi Osaka (JP)
(74) Representative: Rüger, Barthelt & Abel Patentanwälte

(57) **Abstract**

[Object] To provide a driving device for a lighting circuit and an illumination device using the driving device for the lighting circuit usable for both a DC lighting light source and a discharge lamp.

[Means for Settlement] A driving device 1 for on-off driving two switching elements constituting a lighting circuit by output voltages from output terminals Hout and Lout has a setting terminal Vsel, and switches an operation for a discharge lamp and an operation for a DC lighting light source in accordance with an input voltage to the setting terminal Vsel.

## Description

### [Field of the Invention]

The present invention relates to a driving device for a lighting circuit and an illumination device.

### [Background Art]

Traditionally, there has been provided a driving device for driving a switching element of a half-bridge type inverter circuit, which is a lighting circuit for lighting a discharge lamp by supplying AC power thereto (hereinafter, referred to as "AC-type lighting circuit") (for example, a patent document 1). The inverter circuit is provided with a series circuit of two switching elements (for example, MOSFET) connected between output ends of a DC power source, and a resonance circuit including a discharge lamp and connected between two ends of one switching element. The driving device alternately on-off drives the two switching elements, thereby allowing AC power generated by the resonance of the resonance circuit to be supplied to the discharge lamp.

On the other hand, as an electric light source other than the discharge lamp which is lighted by AC power as described above, there is an electric light source (hereinafter, referred to as "DC lighting light source") which is lighted by a lighting circuit for outputting DC power (hereinafter, referred to as "DC-type lighting circuit"). The DC lighting light source includes, for example, light emitting diode and organic EL and the like. As the DC-type lighting circuit for lighting the DC lighting light source as described above, there is used a DC power source circuit including a switching element on-off driven periodically such as, for example, a back converter.

### [Conventional Technique Document]

### [Patent Document]

[Patent Document 1] Japanese Unexamined Patent Application Publication (Translation of PCT Application) No. 2009-512165

### [Disclosure of the Invention]

### [Problems to be solved by the Invention]

In the DC-type lighting circuit, the on-duty of the switching element is made smaller than the case of using the AC-type lighting circuit, and an on-off control, such as on-off control in accordance with zero cross detection of a current flowing through the circuit, is carried out in a completely different manner from the case of using the AC-type lighting. Therefore, it is usually not possible to divert a driving device for driving the switching element as it is by the AC-type lighting circuit and the DC-type lighting circuit.

However, in the existing circumstances where the DC lighting light source has hardly become common as a light source for illumination, when an attempt is made to manufacture the driving device for exclusive use of the DC lighting light source, the number of driving devices to be manufactured becomes few, and hence, the manufacturer's cost becomes relatively high as compared with the driving device for the discharge lamp.

The present invention has been made in view of the above circumstances and an object of the invention is to provide a driving device for a lighting circuit capable of being used both for a DC lighting light source and a discharge lamp, and an illumination device using the driving device for the lighting circuit.

### [Means adapted to solve the Problems]

A first aspect of the present invention is a driving device for a lighting circuit for periodically on-off driving a switching element in a lighting circuit for lighting an electric light source and including an output terminal connected to the switching element and a setting terminal inputted with an electric signal instructing a type of operation, wherein an output to the output terminal is alternately switched for one of the DC lighting light source and one of the discharge lamp in accordance with the electric signal inputted to the setting terminal.

According to this aspect of the invention, the switching of the input to the setting terminal enables the driving device to be used for either of the discharge lamp and the DC lighting light source, and therefore, the manufacturer's cost can be reduced due to the increase of the number of driving devices to be manufactured as compared with the driving device for the lighting circuit for exclusive use of the DC lighting light source.

A second aspect of the present invention is a driving device for a lighting circuit, including two output terminals, wherein there are provided an oscillation part having an oscillation capacitor and outputting a rectangular wave having an on-duty fixed to 50% by switching charging and discharging of the oscillation capacitor and by switching an output level in accordance with a voltage between both the ends of the oscillation capacitor; two drive signal generation circuits for outputting the rectangular wave having one to one correspondence with an output level of the oscillation part and having one to one correspondence with the output terminal; and a driving part for on-off driving each switching element such that the switching element connected to the output terminal corresponding to the drive signal generation circuit whose output is set at an H level is on-controlled and the switching element connected to the output terminal corresponding to the drive signal generation circuit whose output is set at an L level is off-controlled, wherein each drive signal generation circuit includes a capacitor for time delay generation; a charging and discharging circuit starting the charging of the capacitor for time delay generation when the output level of the oscillation part is one output level and becomes one different output level for each drive signal generation circuit and discharging the capacitor for time delay generation in a period when the output level of the oscillation part is the other output level; and a an output circuit for setting an output at an H level in period from the time when a voltage between both the ends of the capacitor for the time delay generation increases and reaches a predetermined voltage until the output level of the oscillation part becomes the other output level and setting the output at an L level in the other period, respectively, the driving device for the lighting circuit further including an operation switching means adapted to change at least one of the charging and discharging current of the oscillation capacitor in the oscillation part and the charging current of the capacitor for time delay generation in each drive signal generation circuit in accordance with the electric signal inputted to the setting terminal.

A third aspect of the present invention is a driving device for a lighting circuit, wherein there are provided the driving device for the lighting circuit according to claim 1 or 2, and the lighting circuit including the switching element periodically on-off driven by the driving device for the lighting circuit and supplying electric power for lighting to an electric light source.

A fourth aspect of the present invention is based on the third aspect of the present invention, wherein the lighting circuit converts DC power supplied from the DC power source into power for lighting an electric light source, and there are provided with a series circuit made of two switching elements connected between output ends of the DC power source and on-off driven by the driving part, and a current detection means adapted to detect a switching current which is a current flowing through one of the two switching elements, the driving device having a current input terminal inputted with an output of the current detection means, and the oscillation means changing an output frequency in accordance with an input from the current input terminal.

### [Effect of the Invention]

According to a first aspect of the invention, the driving device for the lighting circuit for periodically on-off driving the switching element in the lighting circuit for lighting the electric light source includes an output terminal connected to the switching element and a setting terminal inputted with an electric signal instructing a type of operation, and alternately switches an output to the output terminal for one of the DC lighting light source and one of the discharge lamp in accordance with the electric signal inputted to the setting terminal, and therefore, the switching of the input to the setting terminal enables the output to be used for either of the discharge lamp and the DC lighting light source. Thereby, the manufacturer's cost can be reduced due to the increase of the number of driving devices to be manufactured as compared with the driving device for the lighting circuit for exclusive use of the DC lighting light source.

### [Brief Description of the Drawings]

[Fig. 1] Fig. 1 is a circuit block diagram showing a first embodiment of the present invention.
[Fig. 2] Fig. 2 is a circuit block diagram showing one example of an illumination device with a discharge lamp as a light source by using the first embodiment.
[Fig. 3] Fig. 3 is an explanatory drawing showing an example of time variations with a voltage (C101 voltage) between both the ends of an oscillation capacitor, an output voltage of the oscillation part (CP101 output), a voltage value (105b voltage) of a second drive signal, and a voltage value (105a output) of a first drive signal in the first embodiment.
[Fig. 4] Fig. 4 is an explanatory drawing showing another example of time variations with a voltage (C101 voltage) between both the ends of an oscillation capacitor, an output voltage (CP101 output)of the oscillation part, a voltage value (105b voltage) of a second drive signal, and a voltage value (105a output) of a first drive signal in the first embodiment.
[Fig. 5] Fig. 5 is a circuit block diagram showing a drive signal generation part in the first embodiment.
[Figs. 6(a) and 6(b)] Figs. 6(a) and 6(b) are a circuit block diagram showing a setting part in the first embodiment, respectively, and Fig. 6(a) shows a case where a discharge lamp is used as a light source, and Fig. 6(b) shows a case where a DC lighting light source is used as a light source.
[Fig. 7] Fig. 7 is an explanatory drawing showing time variations with a voltage value (Lout output) of a second drive signal, a voltage value (Hout output) of a first drive signal, current flowing through a first switching element Q1, and current flowing through a second switching element Q2 in the example of Fig. 2.
[Fig. 8] Fig. 8 is an explanatory drawing showing time variations with a voltage of a power source terminal Vcc when the lighting of the discharge lamp is started, a voltage of a reference voltage terminal Vreg, a voltage of a frequency control terminal Ctin, an operating frequency, and an on-duty of each drive signal in the example of Fig. 2.
[Fig. 9] Fig. 9 is a circuit block diagram showing an example of the illumination device with a DC lighting light source as a light source by using the first embodiment.
[Fig. 10] Fig. 10 is an explanatory drawing showing time variations with an output voltage (Lout output) to the gate of a second switching element, an output voltage (Hout output) to the gate of a first switching element, current flowing through a first switching element Q1, and current flowing through a second switching element Q2 in the example of Fig. 9.
[Fig. 11] Fig. 11 is an explanatory drawing showing an example of time variations with an output voltage (Hout output) to the gate of the first switching element and current flowing through an inductor L2 in the example of Fig. 9.
[Figs. 12(a) and 12(b)] Fig. 12 (a) is an explanatory drawing showing an example of the layout on a printed circuit board of circuit parts constituting the illumination device of Fig. 2, and Fig. 12(b) is an explanatory drawing showing an example of the layout on the printed circuit board of the circuit parts constituting the illumination device of Fig. 9.
[Fig. 13] Fig. 13 is a circuit block diagram showing another example of the illumination device with a DC lighting light source as a light source by using the first embodiment.
[Fig. 14] Fig. 14 is a circuit block diagram showing a second embodiment of the present invention.
[Fig. 15] Fig. 15 is an explanatory drawing showing the time variations with the voltage (C101 voltage) between both the ends of the oscillation capacitor in a period when the output of the setting part is set at an H level, the output voltage (CP101 output) of the oscillation part, a voltage (C104 voltage) between both the ends of the capacitor in the first drive signal generation circuit, and an output voltage (CP102 output) of the first drive signal generation circuit in the second embodiment.
[Fig. 16] Fig. 16 is an explanatory drawing showing the time variations with
   a voltage (C101 voltage) between both the ends of the oscillation capacitor in a period when the output of the setting part is set at a L level, the output voltage (CP101 output) of the oscillation part, a voltage (C104 voltage) between both the ends of the capacitor in the first drive signal generation circuit, and an output voltage (CP102 output) of the first drive signal generation circuit in the second embodiment.

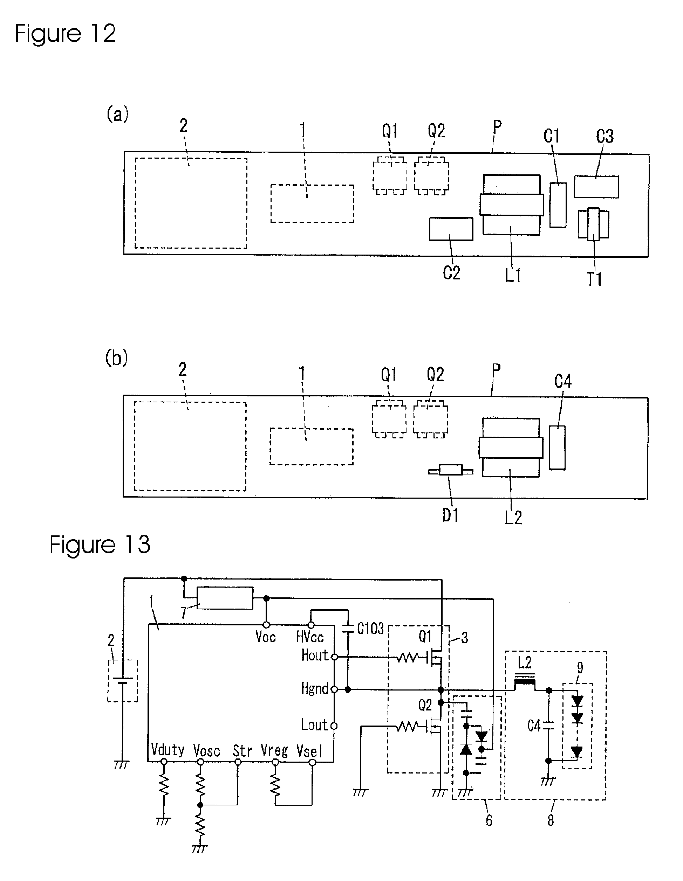

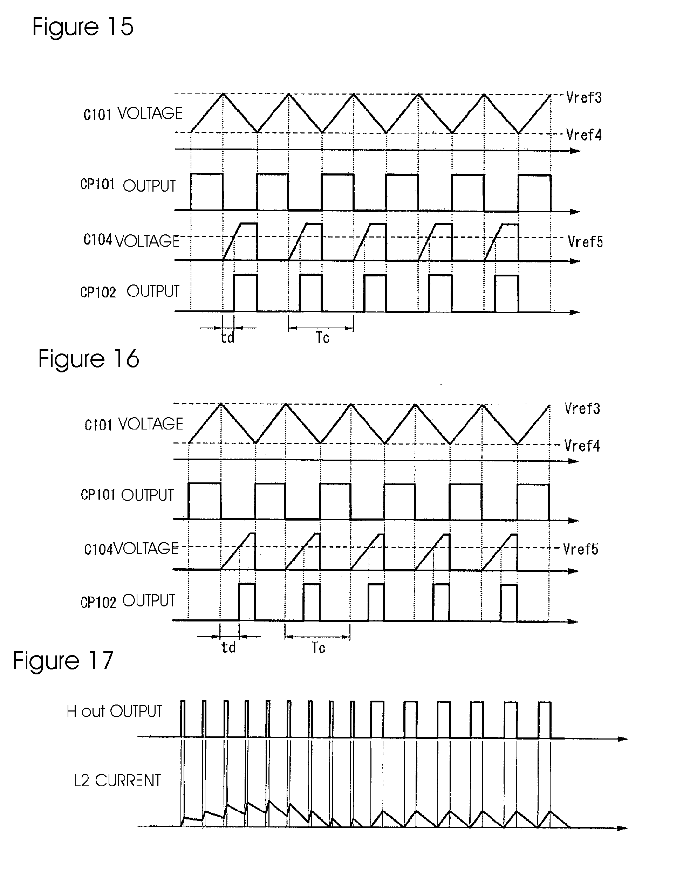

[Fig. 17] Fig. 17 is an explanatory drawing showing the time variations with the output voltage (Hout output) to the gate of the first switching element and the current flowing through the inductor L2 in the case where the second embodiment is used for the illumination device of Fig. 13.

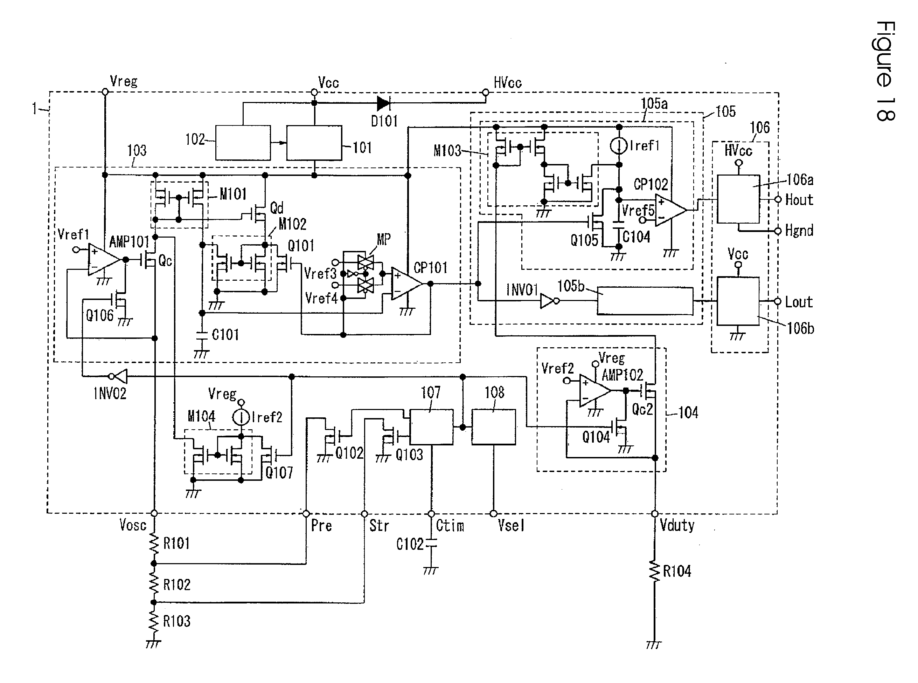

[Fig. 18] Fig. 18 is a circuit block diagram showing a third embodiment of the present invention.

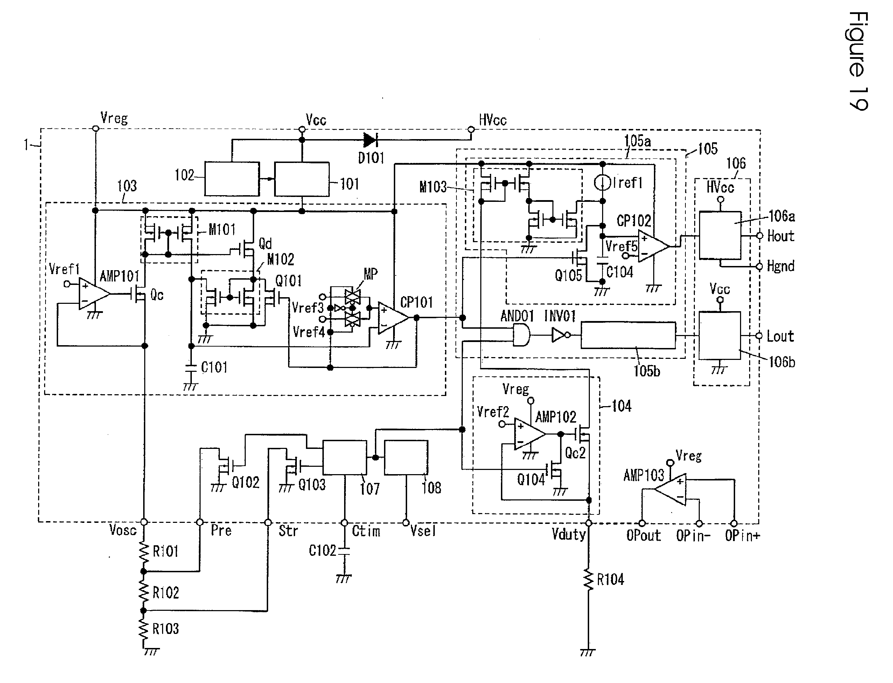

[Fig. 19] Fig. 19 is a circuit block diagram showing a fourth embodiment of the present invention.

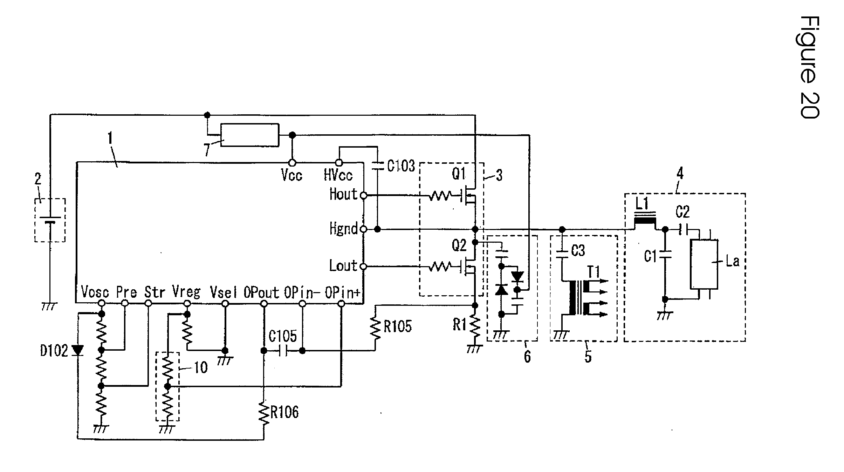

[Fig. 20] Fig. 20 is a circuit block diagram showing an example of the illumination device with a discharge lamp as a light source by using the fourth embodiment.

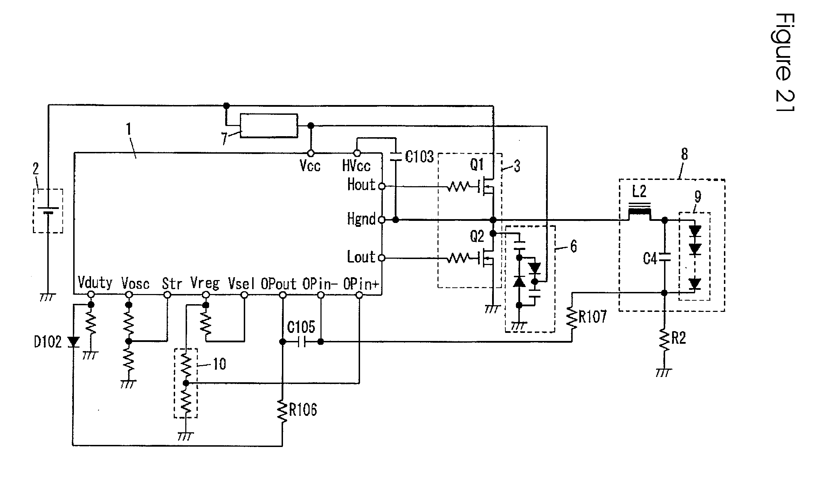

[Fig. 21] Fig. 21 is a circuit block diagram showing an example of the illumination device with the DC lighting light source as a light source by using the fourth embodiment.

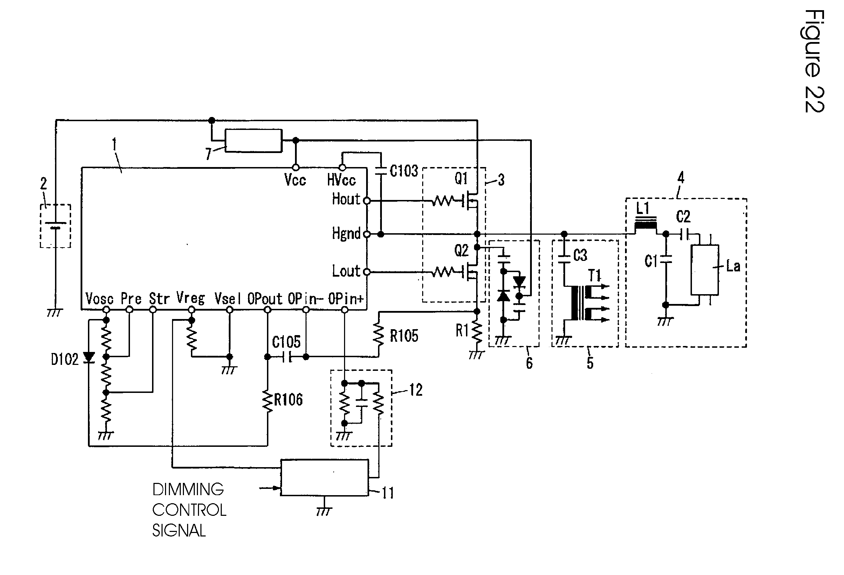

[Fig. 22] Fig. 22 is a circuit block diagram showing another example of the illumination device with the discharge lamp as the light source by using the fourth embodiment.

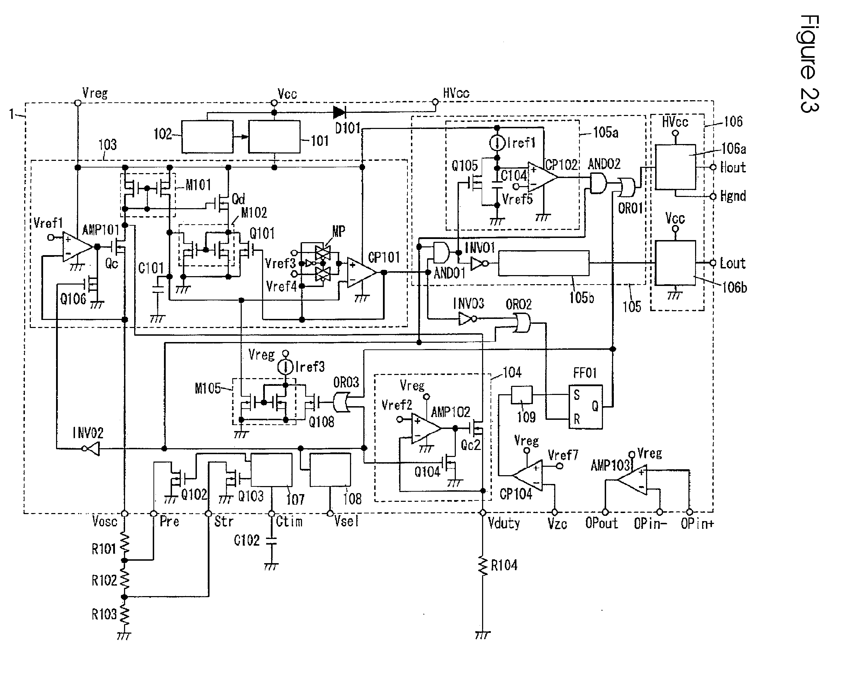

[Fig. 23] Fig. 23 is a circuit block diagram showing a fifth embodiment of the present invention.

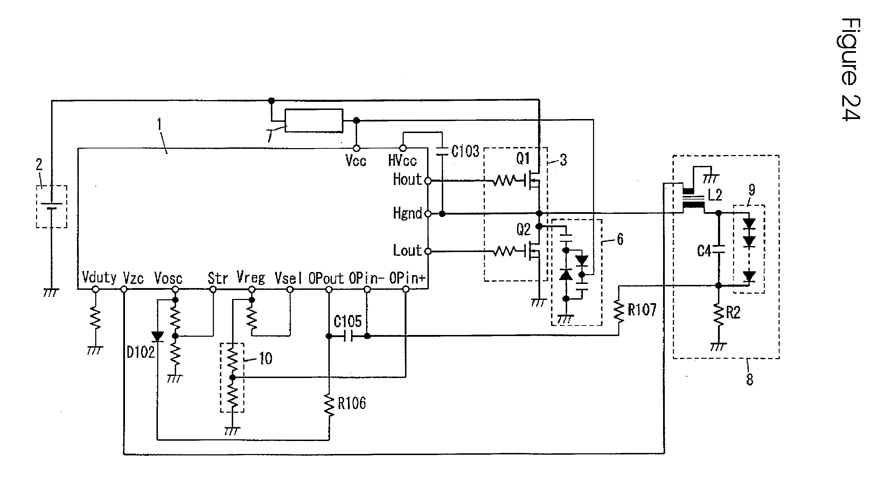

[Fig. 24] Fig. 24 is a circuit block diagram showing an example of the illumination device with the DC lighting light source as the light source by using the fifth embodiment.

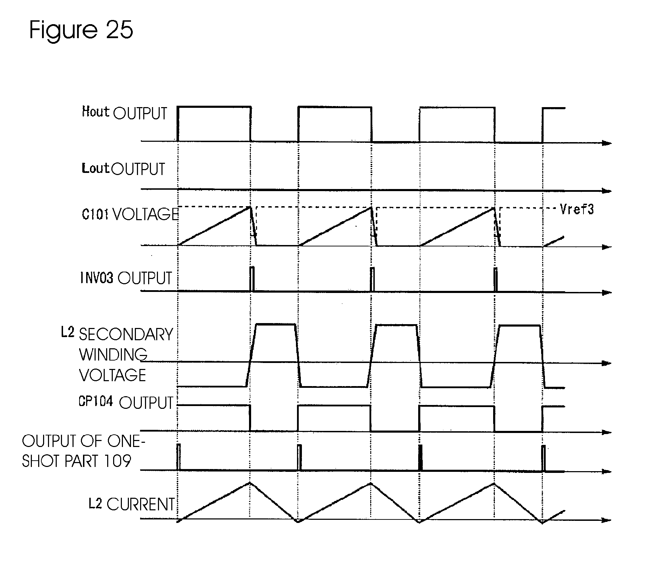

[Fig. 25] Fig. 25 is an explanatory drawing showing the time variations with the output voltage (Hout output) to the gate of the first switching element, the output voltage (Lout output) to the gate of the second switching element, the voltage (C101 voltage) between both the ends of the oscillation capacitor, a output voltage (INV03 output) of a third negative circuit, a voltage (L2 secondary winding voltage) between both the ends of the secondary winding of inductor, an input voltage (CP104 output) to an one-shot part, the output voltage of the one-shot part, and current (L2 current) flowing through inductor in the example of Fig. 24.

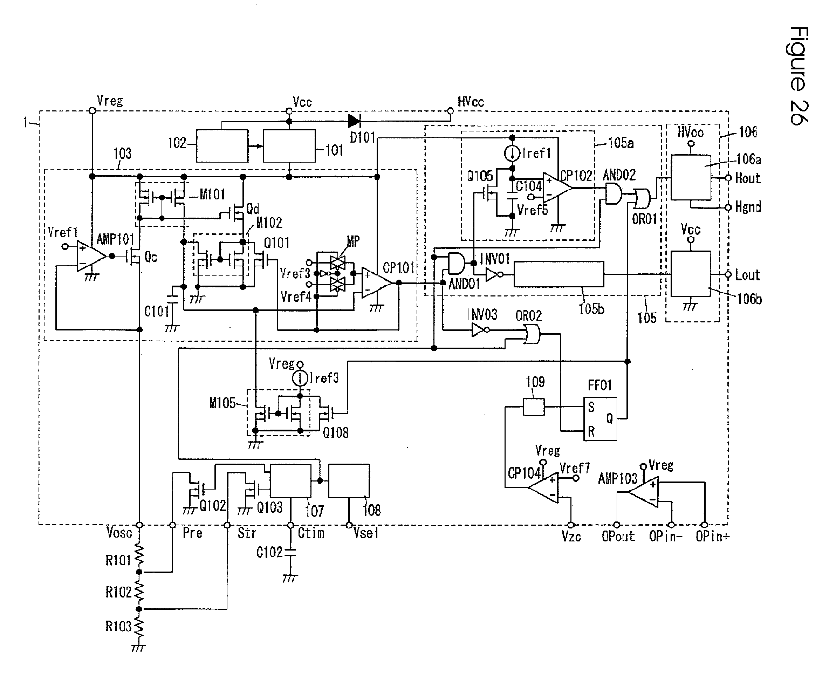

[Fig. 26] Fig. 26 is a circuit block diagram showing a sixth embodiment of the present invention.

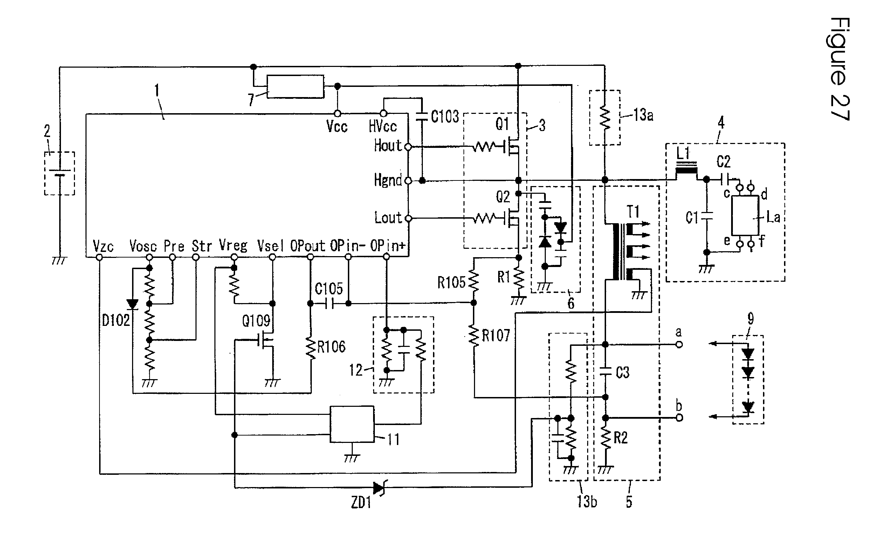

[Fig. 27] Fig. 27 is a circuit block diagram showing a seventh embodiment of the present invention.

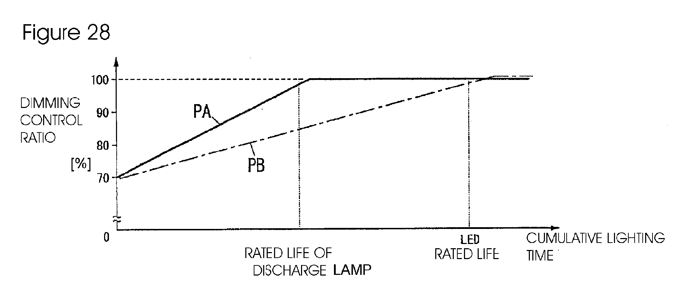

[Fig. 28] Fig. 28 is an explanatory drawing showing an example of the relationship between a cumulative lighting time of the light source and a dimming control ratio in the seventh embodiment.

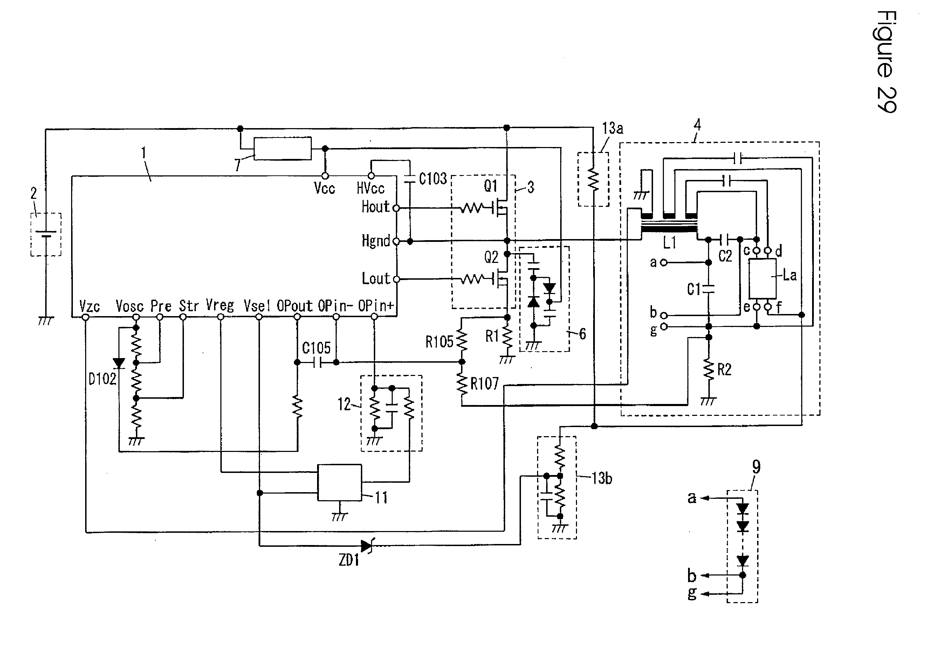

[Fig. 29] Fig. 29 is a circuit block diagram showing an eighth embodiment of the present invention.

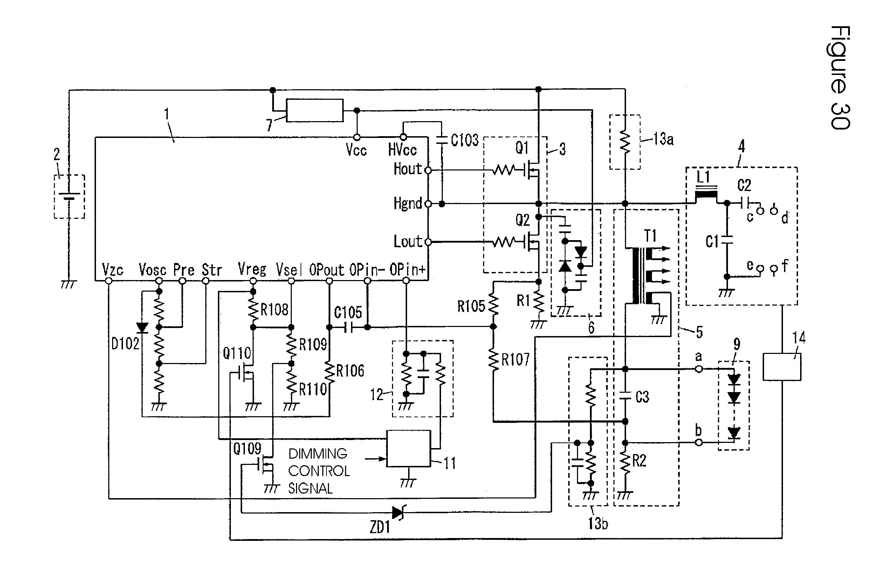

[Fig. 30] Fig. 30 is a circuit block diagram showing a ninth embodiment of the present invention.

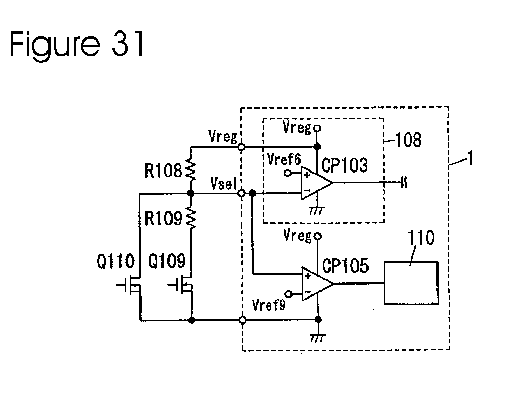

[Fig. 31] Fig. 31 is a circuit block diagram showing principal parts of the ninth embodiment.

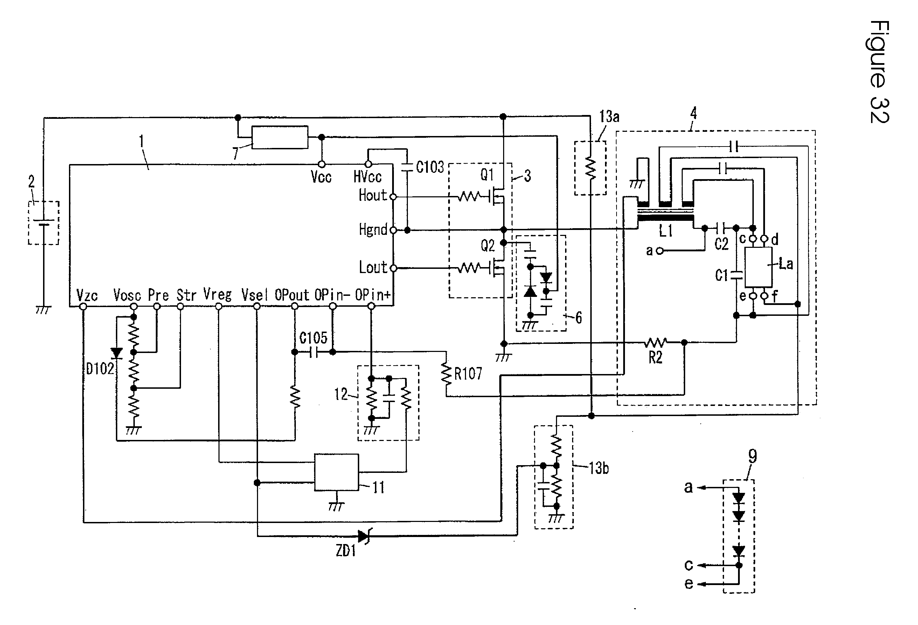

[Fig. 32] Fig. 32 is a circuit block diagram showing a tenth embodiment of the present invention.

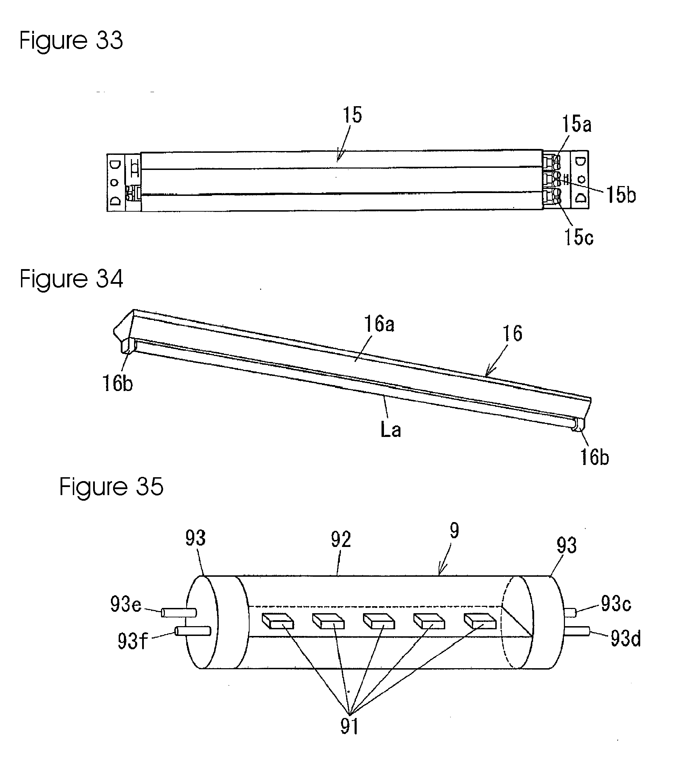

[Fig. 33] Fig. 33 is a plan view showing one example of a case for storing the tenth embodiment.
[Fig. 34] Fig. 34 is a perspective view showing one example of an illumination fixture using the tenth embodiment.
[Fig. 35] Fig. 35 is a perspective view showing one example of a DC lighting light source corresponding to the tenth embodiment.

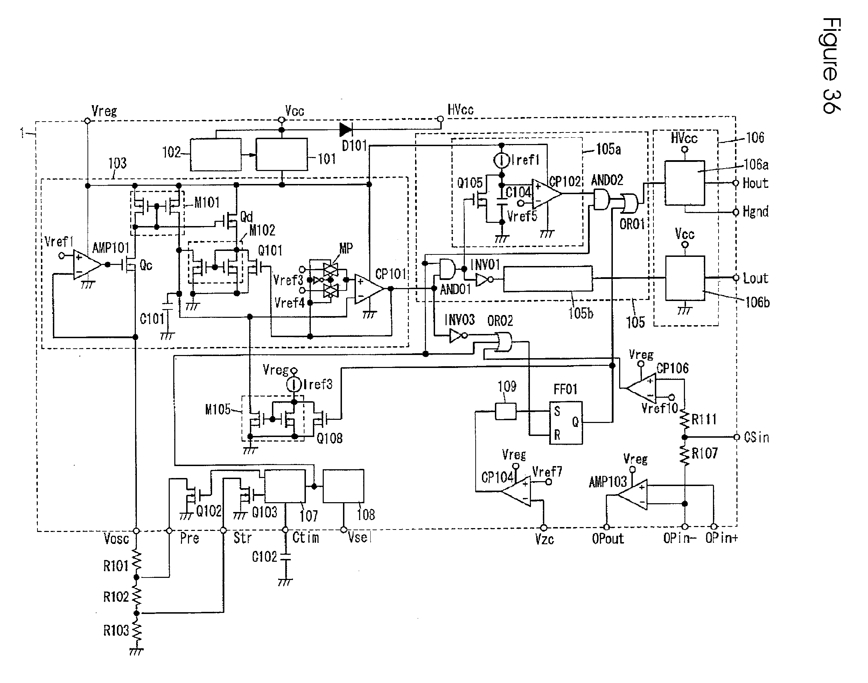

[Fig. 36] Fig. 36 is a circuit block diagram showing a driving device according to an eleventh embodiment of the present invention.

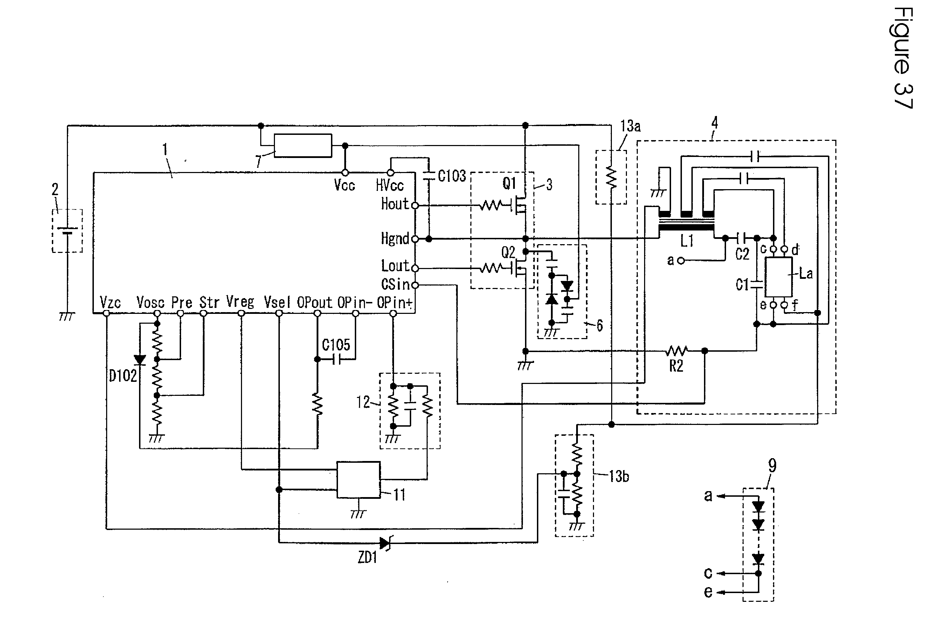

[Fig. 37] Fig. 37 is a circuit block diagram showing the eleventh embodiment.

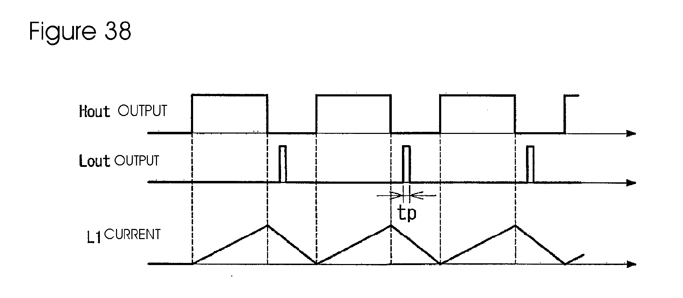

[Fig. 38] Fig. 38 is an explanatory drawing showing the time variations with the output voltage (Hout output) to the gate of the first switching element, the output voltage (Lout output) to the gate of the second switching element, and the current (L1 current) flowing through the inductor in a modified example of the eleventh embodiment.

### [Best Mode for Carrying Out the Invention]

A best mode for carrying out the present invention will be described below referring to the drawings.

### (First Embodiment)

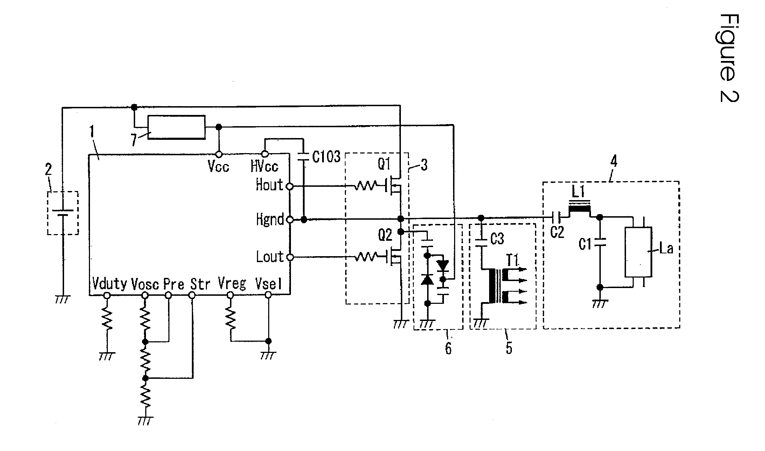

As shown in Fig. 2, a driving device 1 according to the present embodiment is constituted of an integrated circuit of one chip, and outputs a drive signal of a rectangular waveform that periodically on-off controls two switching elements Q1 and Q2 constituting a direct circuit (hereinafter, referred to as "switching circuit") 3 so as to be alternately turned on in a half-bridge type inverter circuit for lighting a discharge lamp La. Note that Fig. 2 shows an example of an illumination device in case that the discharge lamp La is used as a light source. The switching elements Q1 and Q2 are made of a MOSFET, respectively, and constitutes a direct circuit whose one end is inputted with a DC voltage from a DC power source 2 and the other end thereof is connected to a ground. The driving device 1 includes a first output terminal Hout connected to the gate of the switching element (hereinafter, referred to as "first switching element") Q1 at a high side (high voltage side) through a resistor, a second output terminal Lout connected to the gate of the switching element (hereinafter, referred to "second switching element") Q2 at a low side (low voltage side) through a resister, and an intermediate terminal Hgnd connected to a connection point of the two switching elements Q1 and Q2.

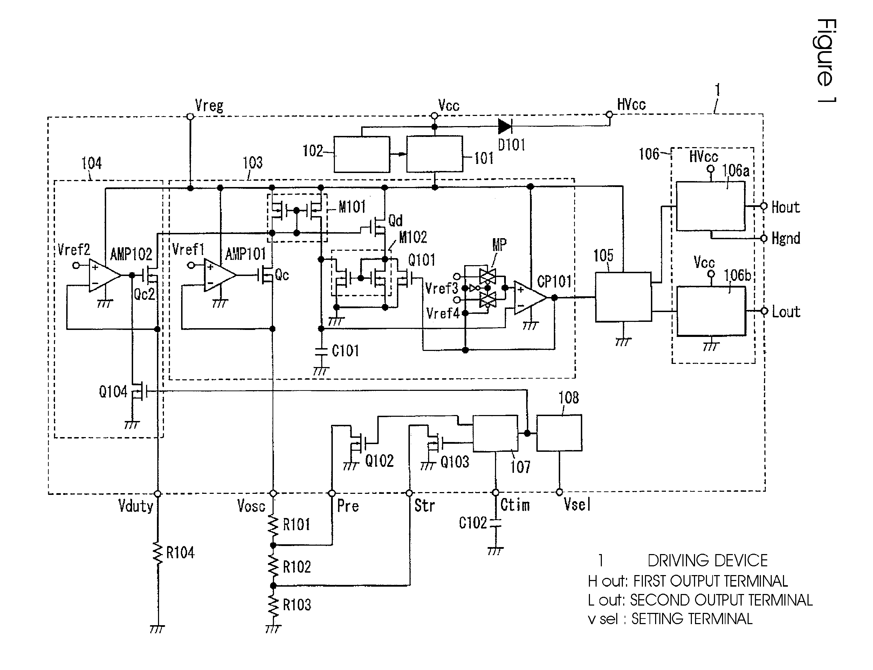

Further, the driving device 1, as shown in Fig. 1, includes a power source terminal Vcc inputted with a DC voltage from the outside, a reference voltage generation part 101 for generating a reference voltage which is a predetermined DC voltage with the DC voltage inputted to the power source terminal Vcc as a power source, a power source detection part 102 allowing the operation of the reference voltage generation part 101 to start when an input of the DC voltage to the power source terminal Vcc is started, and a reference voltage terminal Vreg for outputting the reference voltage outputted by the reference voltage generation part 101 to the outside. The reference voltage generation part 101 can be constituted of the known constant voltage circuit using, for example, a Zener diode, and the reference voltage can be used as the power source of each part of the driving device 1. Further, the driving device 1 has a second power source terminal HVcc connected to a cathode of a diode D101 whose anode is connected to the power source terminal Vcc. The second power source terminal Vcc is connected to an intermediate terminal Hgnd through an externally attached capacitor C103. In the example of Fig. 2, connected to the power source terminal Vcc are a starting circuit 7 for inputting the DC voltage into the power source terminal Vcc immediately after the power supply from the DC power source 2 is started, and a power source circuit 6 which is constituted of, for example, a capacitor and a diode and connected to a connection point of the switching elements Q1 and Q2 in order to generate a predetermined DC voltage and input it to the power source terminal Vcc after driving the switching elements Q1 and Q2 is started by the driving device 1.

Further, the driving device 1 includes an oscillation part 103 for generating periodical rectangular waves with the reference voltage as the power source and an oscillation control terminal Vosc connected to the oscillation part 103. The oscillation control terminal Vosc is connected to the ground through resistors R101, R102, and R103 in the outside of the driving device 1. The oscillation part 103 is provided with a charging mirror circuit M101 whose respective input ends are inputted with a reference voltage and one output end thereof is connected to the ground through an oscillation capacitor C101; a charging switching element Qc composed of a n-type channel field effect transistor connected between the other output end of the charging mirror circuit M101 and an oscillation control terminal Vosc; an operational amplifier AMP101 whose output terminal is connected to the gate of the charging switching element Qc, a non-inversion input terminal thereof is inputted with a predetermined first reference voltage Vref1, and an inversion input terminal thereof is connected to the oscillation control terminal Vosc; a discharging switching element Qd composed of a p-type channel field effect transistor whose gate is connected to the other output end of the charging mirror circuit M101; a discharging mirror circuit M102 whose one input terminal is connected to the ground through oscillation capacitor C101 and the other input terminal thereof is inputted with a reference voltage through the discharging switching element Qd, and each output terminal thereof is connected to the ground respectively; a second discharging switching element Q101 composed of the n-type channel field effect transistor connected between the other input terminal and output terminal of a discharging mirror circuit M102; a comparator CP101 whose inversion input terminal is inputted with a voltage between both the ends of the oscillation capacitor C101 and the output terminal thereof is connected to the second discharging switching element Q101; and a multiplexer MP inputting reference voltages Vref3 and Vref4 in accordance with the output of the comparator CP101 to an non-inversion input terminal of the comparator CP101. The multiplexer MP is constituted by using, for example, a transfer gate, and inputs the predetermined third reference voltage Vref3 to the non-inversion input terminal of the comparator CP101 in a period when the output of the comparator CP101 is set at an H level and inputs the predetermined fourth reference voltage Vref4 lower than the third reference voltage Vref3 to the non-inversion input terminal of the comparator CP101 in a period when the output of the comparator CP101 is set at an L level.

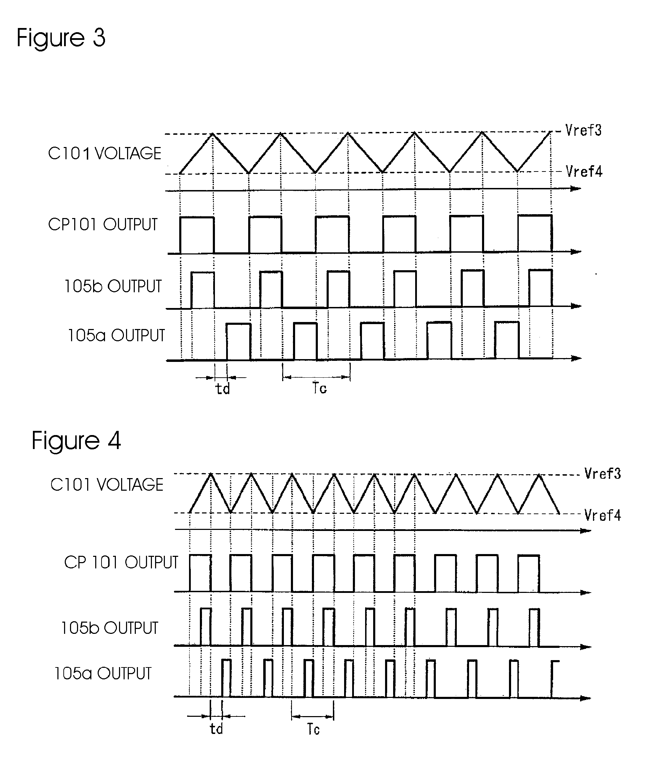

The operation of the oscillation part 103 will be described. In a state in which the oscillator capacitor C101 is not sufficiently charged, the output of the comparator CP101 becomes an H level. As a result, the non-inversion input terminal of the comparator CP101 is inputted with the third reference voltage Vref3, and the second discharging switching element Q101 is tuned on. During this time, the second discharging switching element Q101 connected in parallel to the discharging mirror circuit M102 is turned on, so that the discharging of the oscillation capacitor C101 through the discharging mirror circuit M102 is suppressed, and the voltage between both the ends of the oscillation capacitor C101 is gradually increased by the charging through the charging mirror circuit M101. When the voltage between both the ends of the oscillation capacitor C101 reaches the third reference voltage Vref3 before long, the output of the comparator CP101 becomes an L level, and the input voltage to the non-inversion input terminal of the comparator CP101 drops to the fourth reference voltage Vref4, and at the same time, the second discharging switching element Q101 is turned off. Then, the discharge current through the discharging mirror circuit M102 becomes much more than the charge current through the charging mirror circuit M101. Thereby, the voltage between both the ends of the oscillation capacitor C101 gradually drops. When the voltage between both the ends of the oscillation capacitor C101 drops to the fourth reference voltage Vref4 before long, the output of the comparator CP101 become the L level, and the input voltage to the non-inversion input terminal of the comparator CP101 increases to the third reference voltage Vref3, and the second discharging switching element Q101 is turned on, and the voltage between both the ends of the oscillation capacitor C101 begins to increase again. Subsequently, the same operation is repeated. By the operation described as above, as shown in Figs. 3 and 4, the voltage between both the ends of the oscillation capacitor C101 becomes a shape of triangular wave that repeats moving vertically between the third reference voltage Vref3 and the fourth reference voltage Vref4. Further, the output voltage of the comparator CP101 becomes such rectangular wave that an on-duty is fixed to 50%, and this becomes the output of the oscillation part 103. As the current flowing through the respective mirror circuits M101 and M102 of the oscillation part 103 is increased, the charging and discharging current of the oscillation capacitor C101 is increased, so that the frequency of the output of the oscillation part 103 becomes high.

Further, the driving device 1 is provided with a drive signal generation part 105 for generating two drive signals of rectangular waveform that alternately become the H level by the frequency of the output (that is, the output of the comparator CP101) of the oscillation part 103, and a driving part 106 for driving the switching elements Q1 and Q2 respectively by using the drive signal generated by the drive signal generation part 105.

The driving part 106 is composed of a first driving circuit 106a for driving the first switching element Q1 by allowing a potential difference in accordance with the voltage value of one drive signal (hereinafter, referred to as "first drive signal") to be generated between a first output terminal Hout and an intermediate terminal Hgnd, and a second driving circuit 106b for driving the second switching element Q2 by allowing a potential difference in accordance with the voltage value of the other drive signal (hereinafter, referred to as "second drive signal") to be generated between a second output terminal Lout and the ground.

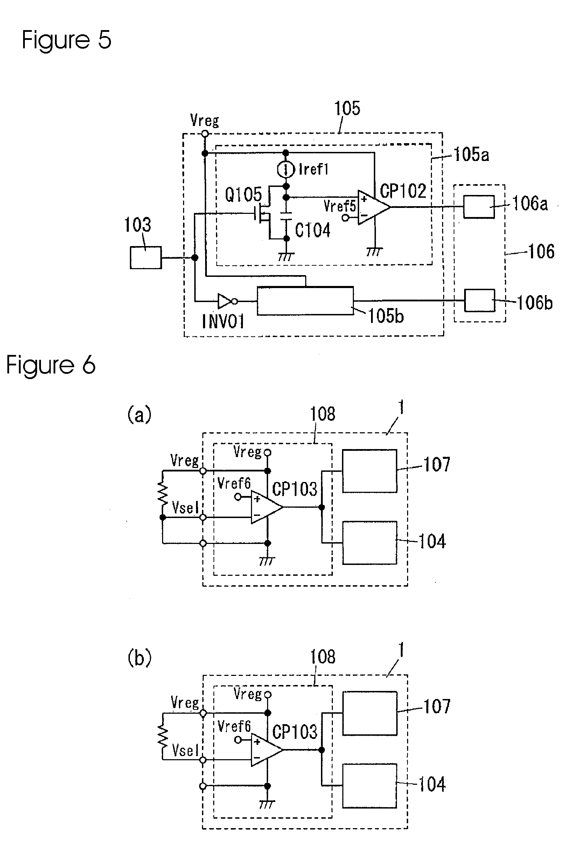

Further, the drive signal generation circuit 105 generates a period (so called a dead time) td when two drive signals become an L level at the same time, so that the first switching element Q1 and the second switching element Q2 are not turned on simultaneously. Specifically, the drive signal generation part 105, as shown in Fig. 5, is provided with a first drive signal generation circuit 105a inputted with the output of the oscillation part 103 as it is and generating a first drive signal, and a second drive signal generation circuit 105b inputted with the output of the oscillation part 103 through a negative circuit INV01 and generating a second drive signal. Note that with respect to the second drive signal generation circuit 105b, since the circuit is the same as the first drive signal generation circuit 105a, the detailed description thereof will be omitted. Each of the drive signal generation circuits 105a and 105b includes a capacitor C104 for time delay generation charged by a constant current source Iref1; a switching element Q105 composed of a n-type channel field effect transistor connected in parallel to the capacitor C104 for time delay generation in which the gate is connected to the oscillation part 103 as it is or through the negative circuit INV01; and a comparator CP102 connected to the driving part 106 whose non-inversion input terminal is inputted with the charge voltage of the capacitor C104 for time delay generation, and the inversion input terminal thereof is inputted with a predetermined fifth reference voltage Vref5, and the output terminal thereof is connected to the drive part 106. That is, as shown in Figs. 3 and 4, a rising timing of the drive signal relative to a switching timing of the output of the oscillation part 103 is delayed by a predetermined time in accordance with a capacitance value of the capacitor C104 for time delay generation, a current value of the constant current source Iref1, and the fifth reference voltage Vref5. Thereby, the dead time td for the predetermined time is generated, and the constant current source Iref1 and the switching element Q105 constitute the charging and discharging circuits in the claims, and the comparator CP102 constitutes the output circuit in the claims.

Further, the driving device 1 is provided with a setting terminal Vsel used for setting a type of operation as to whether the operation is for the discharge lamp or for the DC lighting light source, a setting part 108 for generating the output in accordance with the potential of the setting terminal Vsel, a first control part 107 for controlling the frequency (that is, the frequency of each drive signal. Hereinafter, referred to as "operation frequency") of the output of the oscillation part 103 in accordance with the output of the setting part 108, and a second control part 104 for controlling the oscillation part 103 in accordance with the output of the setting part 108.

To describe more in detail, the setting part 108, as shown in Figs. 6(a) and 6(b), is composed of a comparator CP103 whose non-inversion terminal is inputted with a predetermined sixth reference voltage Vref6 lower than the reference voltage and the inversion input terminal thereof is connected to the setting terminal Vsel. That is, as shown in Fig. 6(a), if the setting terminal Vsel is connected to the ground, the out of the setting part 108 becomes an H level. As shown in Fig. 6(b), if the setting terminal Vsel is connected to the reference voltage terminal Vreg through an appropriate resistor, the output of the setting part 108 becomes an L level, and a type of operation is instructed by an input voltage (electric signal) to the setting terminal Vsel. A user, for example, can switch the input voltage to the setting terminal Vsel and switch the output of the setting part 108 by attaching and detaching a jumper pin between the setting terminal Vsel and the ground.

Further, the driving device 1 is provided with a frequency control terminal Ctin used for controlling the operation frequency, a first control output terminal Pre, and a second control output terminal Str, respectively. Each of the control output terminals Pre and Str is connected to the ground through switching elements Q102 and Q103 on-off driven by the first control part 107, respectively. In the outside of the driving device 1, each of the control output terminals Pre and Str is connected to the connection point of resistors R101, R102, and R103 which are connected between the oscillation control terminal Vosc and the ground, respectively. The first control part 107 on-off drives each of the switching elements Q102 and Q103 in accordance with the voltage of the frequency control terminal Ctin, thereby changing a resistance value between the oscillation control terminal Vosc and the ground. This allows the current flowing through the oscillation control terminal Vosc from the charging mirror circuit M101 of the oscillation part 103 to increase and decrease, thereby changing the operation frequency.

Further, the driving device 1 is provided with a duty control terminal Vduty used for the control of the on-duty of the drive signal. The duty control terminal Vduty is connected to the ground, for example, through the resistor R104 in the outside of the driving device 1. The second control part 104 is composed of the n-type channel field effect transistor, and is provided with a second charging switching element Qc2 whose one end is connected to the connection point with the charging mirror circuit M101 in the oscillation part 103 and the charging switching element Qc and the other end thereof is connected to the duty control terminal Vduty, an operational amplifier AMP102 whose output terminal is connected to the gate of the second charging switching element Qc2 and the non-inversion input terminal thereof is inputted with a predetermined second reference voltage Vref2 and at the same time the inversion terminal thereof is connected to the duty control terminal Vduty, and a control switching element Q104 connected between the gate and the ground of the second charging switching element Qc2 and on-off driven by the output of the setting part 108. That is, in a period when the control switching element Q104 is turned on, the second control part 104 is put into a similar state as if it is not provided, whereas in a period when the control switching element Q104 is turned off, the second control part 104 increases the operation frequency by increasing the charging and discharging current of the oscillation capacitor C101 in the oscillation part 103. As the resistance value of the resistor R104 connected between the duty control terminal Vduty and the ground becomes lower, an incremental width of the charging and discharging current becomes larger, and thus, the operation frequency becomes higher. In the present embodiment, since the dead time td does not depend on the operation frequency, but is constant, an increase of the operation frequency such as from the operation of Fig. 3 to the operation of Fig. 4 (that is, a frequency Tc is made short) means a decrease of the on-duty of each drive signal.

A configuration and an operation of the illumination device using the driving device 1 of the present embodiment will be described below.

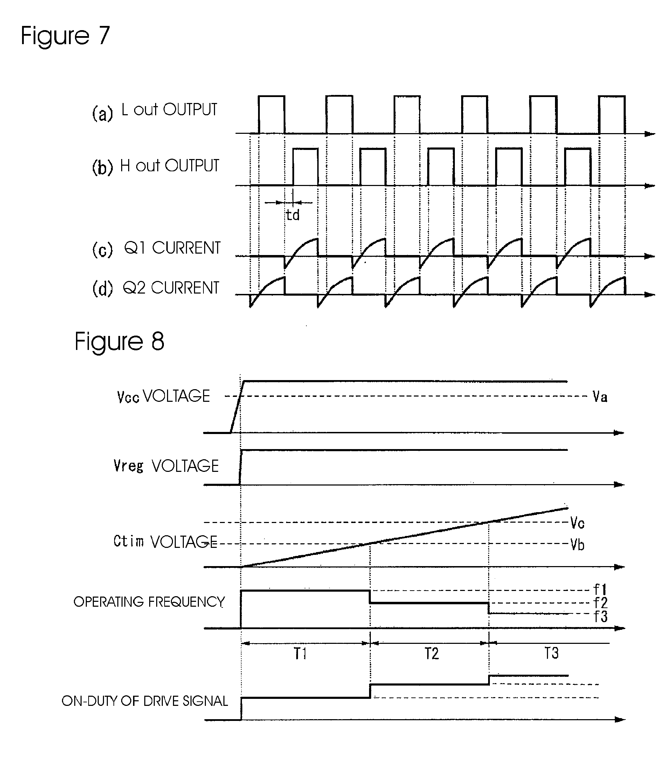

First, a description will be made on the case where the driving device 1 is used for the illumination device in which a discharge lamp La of a hot cathode type is used as a light source as shown in Fig. 2. In the example of Fig. 2, a resonance circuit 4 including the discharge lamp La is connected between a connection point with the first switching element Q1 and the second switching element Q2 and the ground. When the first switching element Q1 and the second switching element Q2 are alternately on-off driven by the driving device 1, the DC power of the DC power source 2 is converted into AC power by resonance of a resonance circuit 4, and is supplied to the discharge lamp La, thereby lighting the discharge lamp La. At this time, the currents as shown in Fig. 7 flow through the first switching element Q1 and the second switching element Q2, respectively. Describing more in detail about the resonance circuit 4, the discharge lamp La has one filament connected to the ground and the other filament connected to the connection point of the switching elements Q1 and Q2 through an inductor L1 and a capacitor C2. Further, a capacitor C1 is connected between the filaments of the discharge lamp La. Further, in the example of Fig. 2, a preheating circuit 5 is provided, which preheats each filament by supplying the current to each of the filaments of the discharge lamp La before starting the lighting of the discharge lamp La. The preheating circuit 5 is provided with a preheating transformer T1 having a primary winding whose one end is connected to the connection point of the switching elements Q1 and Q2 through the capacitor C3 and the other end thereof is connected to the ground, and two secondary windings connected between both ends of one filament each of the discharge lamp La. In the resonance circuit 4, each circuit part except for the discharge lamp La and the preheating circuit 5 constitute the lighting circuit in the claims together with the first switching element Q1 and the second switching element Q2.

In the above described case, the oscillation control terminal Vosc is connected to the ground through the three resisters R101, R102, and R103. The first control output terminal Pre is connected to the connection point of the two resistors R101 and R102 at the high voltage side out of the three resisters R101, R102, and R103. The second control terminal Str is connected to the connection point of the two resistors R102 and R103 at the low voltage side out of the three resistors R101, R102, and R103. Further, the frequency control terminal Ctin is connected to the ground through the capacitor C102. Further, as shown in Fig. 2 and Fig. 6(a), the setting terminal Vsel is connected to the ground, so that the output of the setting part 108 becomes the H level. That is, the control switching element Q104 is turned on in the second control part 104, and therefore, the second control part 104 does not affect the operation.

The operation of the present embodiment at the time when the lighting of the discharge lamp La is started will be described by using Fig. 8. Although not illustrated in detail, the DC power source 2 is composed of a DC power source circuit such as, for example, the known boost converter. When the power source is turned on, the output voltage increases up to a predetermined voltage in a finite time, and after that, the output voltage becomes constant. The power source detection part 102 starts the outputting of the reference voltage to the reference voltage terminal Vreg and the like from the reference voltage generation part 101 when the input voltage to the power source terminal Vcc reaches a predetermined starting voltage Va. When the outputting of the reference voltage from the reference voltage generation part 101 is started, the first control part 107 begins the start of charging of the capacitor C102 by an output of the constant current to the frequency control terminal Ctin and the monitoring of the voltage of the frequency control terminal Ctin, that is, the voltage between both the ends of the capacitor C102. Here, the capacitor C102 discharges when the power source is turned off or immediately after the power source is turned on, and begins the charging from zero every time the discharge lamp La starts up. The first control part 107 maintains both of the switching elements Q102 and Q103 connected to the control output terminals Pre and Str in an off-state in a preheating period T1 when the voltage of the frequency control terminal Ctin after starting the operation reaches a predetermined first switching voltage Vb. Thereby, the resistance value between the oscillation control terminal Vosc and the ground is kept maximum, and the operation frequency becomes the highest preheating frequency f1. During the preheating period T1, the preheating frequency f1 is kept sufficiently high for a resonance frequency of the resonance circuit 4 so that an amplitude of the output voltage to the discharge lamp La becomes small to the extent of not starting the discharge in the discharge lamp La. During the preheating period T1, each filament of the discharge lamp La is preheated. Next, in a starting period T2 when the voltage of the frequency control terminal Ctin reaches a predetermined second switching voltage Vc higher than a first switching voltage Vb after having reached the first switching voltage Vb, the first control part 107 turns on the switching element Q103 connected between the second control output terminal Str and the ground, while keeping in an off-state the switching element Q102 connected between the first control output terminal Pre and the ground, thereby reducing the resistance value between the oscillation control terminal Vosc and the ground, and setting the operation frequency to the second highest starting frequency f2. During the starting period T2, a starting frequency f2 is made sufficiently close to the resonance frequency of the resonance circuit 4 so that the amplitude of the output voltage to the discharge lamp La becomes large to the extent of starting the discharge in the discharge lamp La, and the lighting of the discharge lamp La is started by the start of the discharge in the discharge lamp La during this starting period T2. Next, in a steady-state period T3 after the voltage of the frequency control terminal Ctin reaches the second switching voltage Vc, the operation frequency is set to the most lowest steady-state frequency, thereby maintaining the lighting of the discharge lamp La. As already described, in the present embodiment, as the operation frequency become higher, smaller the on-duty of the drive signal becomes. Hence, as the operation frequency becomes lower by the operation in a stepwise manner toward the preheating frequency f1, the starting frequency f2, and the steady-state frequency f3, the on-duty of the drive signal becomes larger in a stepwise manner as shown in the last line of Fig. 8.

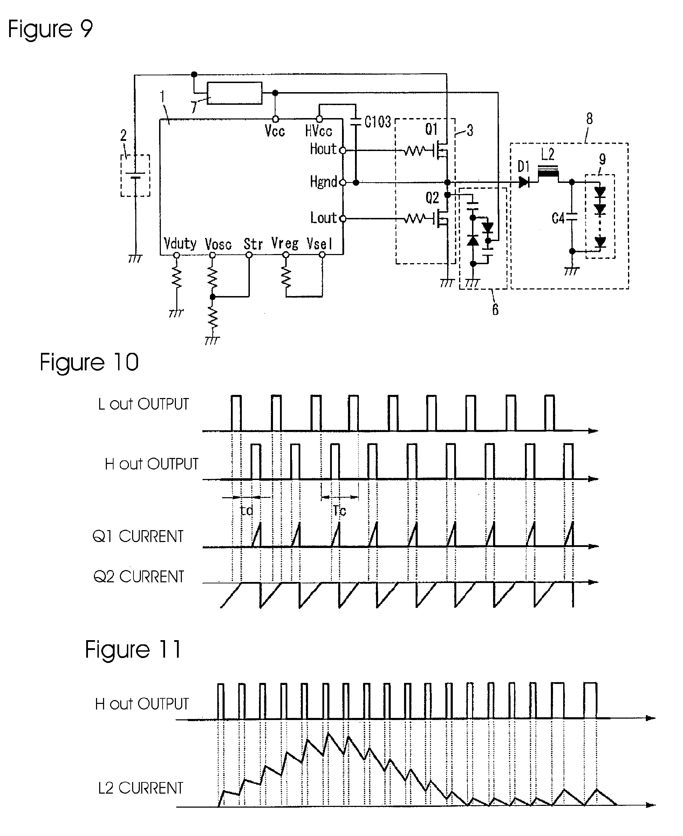

Next, the illumination device using the driving device 1 in the case where the DC lighting light source 9 is used as a light source will be described by using Fig. 9. Here, the DC lighting light source 9 is lighted by DC power inputted between both ends thereof and provided with a series circuit made of, for example, a plurality of light emitting diodes 91 (see Fig. 35). For the DC lighting light source 9, other known light emitting element such as, for example, organic EL may also be used in place of the above light emitting diodes 91. Note that a description on the parts common to Fig. 2 will be omitted. The example of Fig. 2 is provided with a load circuit 8 composed of a DC lighting light source 9, a diode D1 whose anode is connected to the connection point with the first switching element Q1 and the second switching element Q2, an inductor L2 whose one end is connected to a cathode of the diode D1 and the other end thereof is connected to the DC lighting light source 9, and a capacitor C4 connected between the other end of the inductor L2 as a parallel circuit with the DC lighting light source 9 and the ground. Describing the operation of the illumination device, in a period when the first switching element Q1 is turned on, an energy is accumulated in the inductor L2 by the current from the DC power source 2, and in a period when the first switching element Q1 is turned off, the energy of the inductor L2 is released by the flow of the current with the inductor L2 as a power source not depending on the on-off of the second switching element Q2 but through a parasitic diode of the second switching element Q2, and at the same time, the capacitor C4 is charged. The repetition of this operation allows the voltage between both the ends of the capacitor C4 to become a voltage corresponding to the on-duty of the first switching element Q1, and the DC lighting light source 9 is lighted by the supply of the DC power from the capacitor C4. In other words, the diode D1, the inductor L2, and the capacitor C4 constitute the lighting circuit in the claims together with the first switching element Q1 and the second switching element Q2.

In the above described case, similarly to Fig. 6(b) and Fig. 9, the setting terminal Vsel is connected to the reference voltage terminal Vreg through an appropriate resister, so that the output of the setting part 108 becomes the L level. That is, the control switching element Q104 is turned off in the second control part 104, and consequently, the on-duty of each drive signal is made smaller than the case of the discharge lamp La by the operation of the second control part 104, respectively. That is, the second control part 104 constitutes the operation switching means in the claims. The current flowing through the first switching element Q1 and the current flowing through the second switching element Q2 become, for example, the current as shown in Fig. 10, respectively.

Further, the oscillation control terminal Vosc is connected to the ground through two resistors, and the second control terminal Str only is connected to the connection point of the two resisters. Further, the frequency control terminal Ctin is connected to the ground through the capacitor C102 similarly to the case of the discharge lamp La. The first control part 107 increases the output current to the frequency control terminal Ctin larger as described above in a period when the output of the setting part 108 is set at the L level than a period when the output of the setting part 108 is set at the H level, thereby quickening stability of the voltage of the frequency control terminal Ctin after starting. Immediately after the start of charging to the capacitor C4 of the load circuit 8, the current flowing through the inductor L2 becomes, for example, as shown in Fig. 11. By performing the operation as described above, at the starting time, the on-duty of each drive signal changes in a stepwise manner, respectively. Therefore, as compared with the case where the on-duty is constant from the start, it is possible to prevent the current flowing through the inductor L2 from excessively increasing in a state in which the capacitor C4 of the load circuit 8 is not sufficiently charged immediately after starting.

According to the above configuration, a change made in the connection of a jumper pin and the like to the setting terminal Vsel can make the driving device 1 shareable for the discharge lamp and the DC lighting light source, whereby, as compared with the case where the driving device 1 is prepared for the exclusive use of the lighting circuit of the DC lighting light source 9, it is possible to reduce the manufacturer's cost spent for an increased production volume of the driving device 1.

Further, a general effect of using the integrated circuit can permit the reduction of the number of parts and the miniaturization of the parts.

Note that the on-duty of each drive signal may not be limited to the three steps as described above, but, for example, to the two steps.

Here, an example of the layout of each circuit part constituting the illumination device on the printed circuit board P will be shown in Figs. 12(a) and 12(b). Fig. 12(a) shows the layout of the circuit parts of the illumination device of Fig. 2, and Fig. 12(b) shows the layout of the circuit parts of the illumination device of Fig. 9. If a positional relationship between the parts is common to each other similarly to the capacitors C1, C2, and the inductor L1 in the example of Fig. 12(a) and the diode D1, the capacitor C4, and the inductor L2 in the example of Fig. 12(b) in addition to the DC power source 2, the driving device 1, and the switching elements Q1 and Q2 which are parts common to each other, a device for mounting and the setting of its operation (specifically, programs, parameters, and the like) can be shared.

Further, as a modified example of Fig. 9, as shown in Fig. 13, the diode D1 may be omitted, and at the same time, the gate of the second switching element Q2 may be connected to the ground. The change of the illumination device from Fig. 9 to the illumination device of Fig. 13 can be realized by mounting the jumper pin between the gate and the ground of the switching element Q2, and at the same time, by mounting the jumper pin instead of the diode D1.

### (Second Embodiment)

A basic configuration of the present embodiment is common to the first embodiment, and therefore, the description of the portions common to each other will be omitted.

In the first embodiment, the change of the operation frequency is the change of the on-duty of each drive signal. In contrast to this, in the present embodiment, the on-duty of each drive signal can be changed independently from the operation frequency.

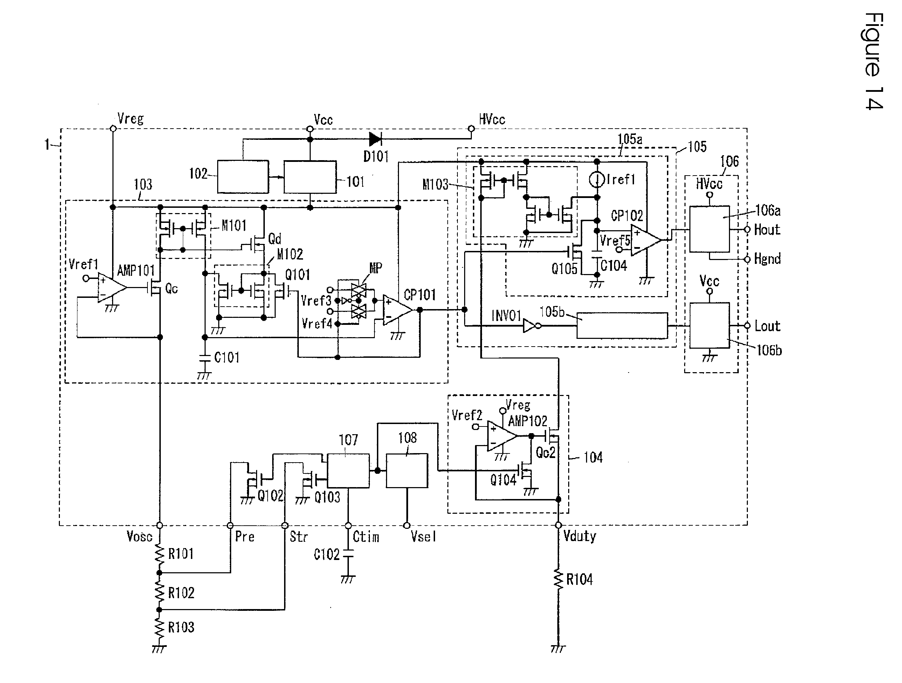

Describing specifically, in the present embodiment, as shown in Fig. 14, each of the drive signal generation circuits 105a and 105B (the illustration is made only on the first drive signal generation circuit 105a) is provided with a current mirror circuit M103 that extracts a charging current to a capacitor C104 for time delay generation, respectively, and a second control part 104 is connected not to a oscillation part 103, but to an output end of the current mirror circuit M103. Thereby, in a period when the output of a setting part 108 is set at an L level and the second control part 104 is operating, the charging of the capacitor C104 for time delay generation becomes slow by the current flowing from a duty control terminal Vduty, and therefore, the on-duty of the output (that is, the drive signal) of a comparator CP210 is made small similarly to the change from Fig. 15 to Fig. 16.

According to the above described configuration, since the on-duty of each drive signal can be changed independently from the operation frequency, and the degree of freedom is enhanced in design as compared with the case where the on-duty of each drive signal cannot be changed independent from the operation frequency similarly to the first embodiment. Consequently, in the illumination device such as Fig. 13 which uses a DC lighting light source 9, similarly to the example of Fig. 17 compared with, for example, the example of Fig. 11, a design such as reducing an electric stress to each circuit part by suppressing the maximum value of the current flowing through a inductor L2 during the charging of the capacitor C4 is made easier.

### (Third Embodiment)

A basic configuration of the present embodiment is common to the second embodiment, and therefore, the description of the portions common to each other will be omitted.

In the present embodiment, as shown in Fig. 18, the gate of a charging switching element Qc of the oscillation part 103 is connected to the ground through a first changeover switching element Q106 composed of an n-channel type field effect transistor. This first changeover switching element Q106 is connected to the setting part 108 through a negative circuit INV02.

Further, a driving device 1 according to the present embodiment has one input end connected to a connection point with a charging mirror circuit M101 of the oscillation part 103 and the charging switching element Qc, and has the other input end connected to a constant current source Iref2, and is provided with a second charging mirror circuit M104 whose respective output ends are connected to the ground, and a second changeover switching element Q107 composed of a n-channel type field effect transistor and connected in parallel to a second charging mirror circuit M104 and whose gate is connected to the setting part 108.

That is, when a discharge lamp La is used as a light source, the output of a setting part 108 becomes an H level, and the first changeover switching element Q106 is turned off, while the second changeover switching element Q107 is turned on, so that the current does not flow through a second charging mirror circuit M104, and performs the same operation as the first embodiment and the second embodiment.

Further, when a DC lighting light source 9 is used as the light source, the output of the setting part 108 becomes an L level, and the first changeover switching element Q106 is turned on, while the second changeover switching element Q107 is turned off, so that the operation frequency is maintained at a constant value in accordance with the current value of a constant current source Iref2 irrespective of the resistance value between an oscillation terminal Vosc and the ground and the operation of a first control part 107.

According to the above described configuration, a design is easily made, which changes the operation frequency in the case of using the DC lighting light source 9 as the light source into an operation frequency that avoids a frequency band not desirable to be used such as a frequency band used for infrared communication such as, for example, the remote-controller of home electric appliances and the frequency band having a possibility of generating electromagnetic noises affecting the operation of other equipment.

### (Fourth Embodiment)

A basic configuration of the present embodiment is common to the second embodiment, and therefore, the description of the portions common to each other will be omitted.

In the present embodiment, as shown in Fig. 19, in the drive signal generation part 105, the output of an AND circuit AND01 with the output of an oscillation circuit 103 and the output of a setting part 108 as an input is inputted to a negative circuit INV01 instead of inputting the output of the oscillation part 103 as it is. That is, a second drive signal is fixed to an L level in a period when the output of the setting part 108 is set at the L level.

Further, a driving device 1 is integrated with an additional operational amplifier AMP103 which is an independent operational amplifier, and a non-inversion side terminal OPin+ connected to an non-inversion input terminal of this additional operational amplifier AMP103, an inversion side terminal OPin- connected to an inversion input terminal and an output side terminal OPout connected to the output terminal are provided in the driving device 1, respectively.

An illumination device using the present embodiment will be described below.

First, the case where a discharge lamp La is used as a light source will be described by using Fig. 20. Note that a basic configuration of the illumination device of Fig. 20 is common to the illumination device of Fig. 2 described in the first embodiment, and therefore, the description of the portions common to each other will be omitted.

In the illumination device of Fig. 20, a detection resistor R1 for detecting the current flowing through a second switching element Q2 is connected between the second switching element Q2 and the ground, and the connection point with the detection resistor R1 and a second switching element Q2 is connected to an inversion side terminal Opin- through a resistor R105. Further, a non-inversion side terminal OPin+ is inputted with a reference voltage outputted from a reference voltage terminal Vreg, the reference voltage being divided by a voltage dividing circuit 10. Further, an output side terminal OPout is connected to an inversion side terminal OPin- through a capacitor C105, and at the same time, is connected to an oscillation control terminal Vosc through a resister R106 and a diode D102 whose anode is directed to the oscillation control terminal Vosc. That is, the additional operational amplifier AMP103 constitutes an integrated circuit. Then, as the current flowing through the second switching element (hereinafter, referred to as "switching current") is increased, the current flowing through the detection resistor R1 is increased with a higher input voltage to the inversion side terminal OPin-, so that the output voltage to the additional operational amplifier AMP103 becomes low and the current flowing through the oscillation control terminal Vosc is increased. Therefore, the difference between the operation frequency and the resonance frequency of the resonance circuit 4 is increased to reduce the output power to the discharge lamp La, and as a result, a feedback control is achieved, which turns the output power to the discharge lamp La into power in accordance with the input voltage to the non-inversion side terminal OPin+. That is, the detection resistor R1 constitutes the current detection means in the claims, and the inversion side terminal OPin- in the present embodiment constitutes the current input terminal in the claims.

Next, the case where the discharge lamp La is used as the light source will be described by using Fig. 21. Note that a basic configuration of the illumination device of Fig. 21 is common to the illumination device of Fig. 9 described in the first embodiment, and therefore, the description of the portions common to each other will be omitted.

In the illumination device of Fig. 21, the diode D1 is omitted as compared with the illumination device of Fig. 9, and in addition, a detection resistor R2 for detecting the current flowing through the DC lighting light source 9 (or the switching current flowing through the parasitic diode of the second switching element Q2) is connected as the current detection means between a parallel circuit with the DC lighting light source 9 and a capacitor C4 and the ground, and a connection point with the detection resistor R2 and the parallel circuit is connected to the inversion side terminal OPin- through a resistor R107. Further, the non-inversion side terminal OPin+ is inputted with a constant voltage by the voltage dividing resistor 10, and an output side terminal OPout is connected to the inversion side terminal OPin-through a capacitor C105, and at the same time, is connected to a duty control terminal Vduty through the resistor R106 and a diode D102 whose anode is directed to the duty control terminal Vduty. That is, the additional operational amplifier AMP103 constitutes an integrated circuit similarly to the case of Fig. 20. As a result, a feedback control such that the output power to the DC lighting light source 9 is brought into power in accordance with the input voltage to the non-inversion side terminal OPin+ is achieved.

Note that in the illumination device of Fig. 20, the input voltage to the non-inversion side terminal OPin+ is made variable instead of constant, so that the output power (that is, an optical output of the discharge lamp La) to the discharge lamp La as a target value of the feedback control may be made variable. For example, as shown in Fig. 22, a dimming control signal which is an electric signal to instruct the optical output is inputted from the outside, and an output control circuit 11 in which the larger the optical output instructed by the inputted dimming control signal is, the higher on-duty PWM signal is outputted, and a smoothing circuit 12 for generating a DC voltage of the voltage value in accordance with the optical output and inputting it to the non-inversion side terminal OPin+ by dividing and smoothing the PWM signal outputted by the optical output control circuit 11 are provided. In Fig. 22, the optical output control circuit 11 obtains a power source from the reference voltage terminal Vreg.

### (Fifth embodiment)

A basic configuration of the present embodiment is common to the fourth embodiment, and therefore, the description of the portions common to each other will be omitted.

In the present embodiment, as shown in Fig. 23, a second control part 104 and a drive signal generation part 105 have the same configuration as the first embodiment. That is, a dead time td is constant, and the higher the operation frequency is, the smaller the on-duty thereof becomes.

Further, a gate of a charging switching element Qc of an oscillation part 103, similarly to the third embodiment, is connected to the ground through a first changeover switching element Q106 whose gate is connected to a setting part 108 through a negative circuit INV02. A resistance value between an oscillation control terminal Vosc and the ground does not affect each drive signal by the first changeover switching element Q106 being turned on in a period when an output of the setting part 108 is set at an L level(that is, when a DC lighting light source 9 is used as a light source).

Further, a first drive signal generation circuit 105a is inputted with a logical product of the output of the oscillation part 103 and the output of the setting part 108 by an AND circuit (hereinafter, referred to as "first AND circuit") AND01 similarly to a negative circuit INV01 of the preceding stage of a second drive signal generation circuit 105b. That is, the output of the first drive signal generation circuit 105a is fixed to an H level with a switching element Q105 of the first drive signal generation circuit 105a maintained in an off state in a period when the output of the setting part 108 is set at an L level. Further, a second AND circuit AND02 adapting the logical product with the output of the first drive signal generation circuit 105a and the output of the setting part 108 is provided between the first drive signal generation circuit 105a and a driving part 106. Therefore, the output of the first drive signal generation circuit 105a does not affect the output of a first output terminal Hout in a period when the output of the setting part 108 is set at the L level. Further, similarly to the fourth embodiment, a second drive signal is fixed to the L level in a period when the output of the setting part 108 is set at the L level by the first AND circuit AND01.

Further, a driving device 1 is provided with a RS type flip-flop circuit FF01 which generates rectangular waves inputted to a first drive circuit 106a in a period when the output of the setting part 108 is set at the L level. An output terminal of the flip-flop circuit FF01 is inputted to the first drive circuit 106a through a first OR circuit OR1 together with the output of a second AND circuit AND02.

Further, the driving device 1 is provided with a zero cross input terminal Vzc which is inputted with a voltage induced by a secondary winding provided in an inductor L2 connected between a first switching element Q1 and the DC lighting light source 9 in the case of the illumination device using the DC lighting light source 9 as a light source as shown in Fig. 24. Further, the driving device 1 is provided with a comparator CP104 whose non-inversion input terminal is inputted with a predetermined seventh reference voltage Vref7 and the inversion input terminal thereof is connected to the zero cross input terminal Vzc, and an one-shot part 109 which inputs a pulse-shaped output to a set terminal of the flip-flop circuit FF01 when the output of this comparator CP104 changes from the L level to an H level. The reset terminal of the flip-flop circuit FF01 is inputted with the output of a second OR circuit OR02 which adapts the logical sum with a negation by a negative circuit INV03 of the output of the oscillation part 103 and the output of the setting part 108.

Further, the driving device 1 is provided with a second discharging mirror circuit M105 whose one input end is connected to an oscillation capacitor C101 of the oscillation part 103 and the other input end thereof is connected with a constant current source Iref3 and respective output terminals thereof are connected to the ground respectively, a discharging changeover switching element Q108 composed of a n-channel type field effect transistor and connected between a connection point with the constant current source Iref3 and a second discharging mirror circuit M105 and the ground, and a third OR circuit OR3 which inputs a logical sum of the output of the flip-flop circuit FF01 and the output of the setting part 108 to the gate of the discharging changeover switching element Q108.

Out of the configuration of the driving device 1 according to the present embodiment, a difference with the first embodiment is that the operation is not affected in a period when the output of the setting part 108 is set at an H level. Hence, the operation of the present embodiment in a period when the output of the setting part 108 is set at an H level is common to the first embodiment.

The operation of the driving device 1 according to the present embodiment in a period when the illumination device shown in Fig. 24 is used, that is, in a period when the output of the setting part 108 is set at an L Level will be described below. Note that the illumination device of Fig. 24 is basically common to the illumination device of Fig. 21 described in the fourth embodiment, but as described above, it differs from the other in that a secondary winding is provided in a inductor L2 and is connected to a zero cross input terminal Vzc and in that a terminal whose output side terminal OPout is connected through a resister R106 and a diode D102 is not a duty control terminal Vduty, but an oscillation control terminal Vosc.

In a period when the output of the setting part 108 is set at the L level, the second drive signal generation circuit 105b does not function by the operation of the first AND circuit AND01, and the second drive signal is fixed to the L level, and the first drive signal generation circuit 105a does not function by the operations of the first AND circuit AND01 and the second AND circuit AND02, and the waveform of the output of the flip-flop circuit FF01 becomes the waveform of the output of the first output terminal Hout.

Immediately after starting the operation, no current flows through the inductor L2, and therefore, the output of the comparator CP104 becomes the H level, and the output of the flip-flop circuit FF01 becomes the H level, thereby turning on a first switching element Q1. In a period when the output of the flip-flop circuit FF01 is set at the H level, the discharging changeover switch Q108 is turned on, so that a discharge through the second discharging mirror circuit M105 is not performed, and the voltage between both the ends of the oscillation capacitor C101 gradually becomes high by the operation of the second control part 104. When the voltage betweenboththe ends of the oscillation capacitor C101 reaches a third reference voltage Vref3 before long, the output of the comparator CP101, that is, the output of the oscillation part 103 becomes the L level, and therefore, the input to the second OR circuit OR02 from the negative circuit INV03 becomes the H level. Whereupon, the output of the second OR circuit OR2 becomes the H level, and as a result, the output of the flip-flop circuit FF01 changes to the L level, and the first switching element Q1 is turned off.

In a period when the output of the flip-flop circuit FF01 is set at the L level, the output of a third OR circuit OR3 becomes the L level, thereby turning off the discharging changeover switch Q108. Consequently, the voltage between both the ends of the oscillation capacitor C101 suddenly drops in the oscillation part 103 by the discharge through the second discharging mirror circuit M105. Thereby, the output of the oscillation part 103 becomes the H level, and the input to a reset terminal of the flip-flop circuit FF01 becomes the L level. Further, the first switching element Q1 is turned off, and this leads to the reduction of the current flowing through the inductor L2 and allows an induced voltage to be generated in the secondary winding of the inductor L2. Thus, the output of the comparator CP104 becomes the L level. As a result, a pulse is inputted to the set terminal of the flip-flop circuit FF01, and the output of the flip-flop circuit FF01 becomes the H level, and the first switching element Q1 is turned on. Subsequently, the same operation is repeated, whereby the voltage of the first output terminal Hout, the voltage of the second output terminal Lout, the voltage between both the ends of the oscillation capacitor C101, the input voltage to the second OR circuit OR2 from the negative circuit INV03, the voltage induced to the secondary winding of the inductor L2, the output voltage of the comparator CP104, the output of the one-shot part 109, and the current flowing through the inductor L2 become the waveform as shown in Fig. 25, respectively. Note that in the third line from the upper part of Fig. 25, the solid line represents the voltage between both the ends of the oscillation capacitor C101, whereas the broken line represents the input voltage to the non-inversion input terminal of the comparator CP101 that generates the output of the oscillation part 103.

According to the configuration as described above, in a period when the DC lighting light source 9 is used as a light source and the output of the setting part 108 becomes the L level, an operation is performed in a so-called critical conduction mode where the length of a period in which the current flowing through the inductor L2 becomes zero becomes extremely short. Therefore, a switching loss is hard to increase as compared with the case where the operation is performed in a discontinuous conduction mode in which a period when the current flowing through the inductor L2 becomes zero becomes relatively long, and the miniaturization of the inductor L2 is possible as compared with the case where the operation is performed in the continuous conduction mode in which the current always flows through the inductor L2. In addition, the switching loss is hard to increase.

### (Sixth Embodiment)

A basic configuration of the present embodiment is common to the fifth embodiment, and therefore, the description of the portions common to each other will be omitted.

In the present embodiment, as shown in Fig. 26, a first changeover switching element Q106 and a second control part 104 are omitted. That is, even in a period when the output of a setting part 108 is set at an L level, a speed of charging and discharging of an oscillation capacitor C101, that is, a frequency of the output of an oscillation part 103 corresponds to the current flowing through an oscillation control terminal Vosc.

### (Seventh embodiment)

The present embodiment is an illumination device as shown in Fig. 27, which is constituted by using the driving device 1 of the sixth embodiment.

A basic configuration of the present embodiment is common to the illumination device described in Fig. 22 in the fourth embodiment, and therefore, the description of the portions common to each other will be omitted. In the present embodiment, not only a discharge lamp La but also a DC lighting light source 9 are connectable as a light source, and an input voltage to a setting terminal Vsel can be automatically changed over in accordance with the presence or absence of the connection of the DC lighting light source 9. To describe more in detail, a capacitor C3 is connected to the ground side rather than a transformer T1 in a preheating circuit 5, and at the same time, both ends of the capacitor C3 are provided with terminals a and b which are connected with one terminal each of the DC lighting light source 9, respectively. That is, as the inductor L2 and the capacitor C4 of the illumination device described in Fig. 21 in the fourth embodiment, a preheating circuit 5 is appropriated.

Further, similarly to the illumination device described in Fig. 21, a detection resistor R2 is connected between the capacitor C3 and the ground, and a connection point with the capacitor C3 and the detection resistor R2 is connected to an inversion side terminal OPin- of the driving device 1 through a resistor R107. Further, a connection point with a first switching element Q1 and a second switching element Q2 is connected to a DC power source 2 through an appropriate impedance 13a, for example, a resistor.

Further, the illumination device is provided with a setting switching element Q109 composed of an n-channel type field effect transistor and connected between a setting terminal Vsel and the ground, a load discrimination circuit 13b for dividing, smoothing, and outputting a voltage for the ground of the terminal a for the DC lighting light source connected to a connection point with the capacitor C3 and a transformer T1. The output end of the load discrimination circuit 13b is connected to the setting switching element Q109 through a zener diode ZD1. That is, when the DC lighting light source 9 is connected to the terminals a and b, the output voltage of the load discrimination circuit 13b is lowered than when the DC lighting light source 9 is not connected to the terminals a and b. The load discrimination circuit 13b, the zener diode Zd1, and the setting switching element Q109 are selected respectively in such a manner that when the DC lighting light source 9 is connected to the terminals a and b before the switching element Q1 is on-off driven, the setting switching element Q109 is turned off, and when the DC lighting light source 9 is not connected to the terminals a and b, the setting switching element Q109 is turned on. That is, the input voltage to the setting terminal Vsel is automatically changed over in accordance with the presence or absence of the connection of the DC lighting light source 9.

In the driving device 1, the detection of the input voltage of the setting terminal Vsel is performed before the on-off driving of the switching element Q1 is started, and the output of a setting part 108 does not change after the operation of the switching element Q1 is started. Since such setting part 108 can be realized by the known technology by using, for example, a RS type flip-flop circuit, detailed illustration and description thereof will be omitted.

Further, an optical output control circuit 11 in the present embodiment does not operate in accordance with a dimming control signal inputted from the outside, and counts cumulative lighting time of a light source, and compensates for the reduction of a luminous flux accompanying the deterioration due to aging of the light source by the increase of the output power to the light source, and gradually changes the on-duty of the input to a smoothing circuit 12, that is, the input voltage to a non-inversion input terminal OPin+ according to the increase in cumulative lighting time so as to maintain a nearly constant light flux. Since the relationship between the reduction of the light flux and the cumulative lighting time differs in the case of the discharge lamp La and in the case of the DC lighting light source 9, the optical output control circuit 11 is inputted with the output voltage of the load discrimination circuit 13b, and the optical output control circuit 11 determines whether the light source is the discharge lamp La or the DC lighting light source 9 based on the input voltage from the load discrimination circuit 13b, and performs the operation in accordance with the determined result. In other words, when it is determined that the light source is the discharge lamp La (that is, when the DC lighting light source 9 is not connected), the increase of the output power is made relatively fast as shown in Fig. 28 by a solid line PA, and when it is determined that the light source is the DC lighting light source 9 (that is, when the DC lighting light source 9 is connected), the increase of the output power is made relatively slow as shown in Fig. 28 by a broken line PB. In Fig. 28, the axis of abscissas represents the cumulative lighting time, and the axis of ordinate represents a ratio of the output power to a rated power of the light source (hereinafter, referred to as "dimming control ratio"). Further, in the example of Fig. 28, irrespective of the fact that the light source is the discharge lamp La or the DC lighting light source 9, the dimming control ratio is 70% at first, and is gradually increased to 100% in matching with an increase in the cumulative lighting time. The timing by which the dimming control ratio reaches 100% is set slightly slower than a timing by which the cumulative lighting time reaches a rated life of the light source irrespective of the fact that the light source is the discharge lamp La or the DC lighting light source 9.

### (Eighth Embodiment)

A basic configuration of the present embodiment is common to the seventh embodiment, and therefore, the description of the portions common to each other will be omitted.

In the present embodiment, in a resonance circuit 4 instead of providing a preheating circuit 5, a circuit with a capacitor (hereinafter, referred to as "parallel capacitor") C1 connected in parallel to a series circuit of a discharge lamp La and a capacitor (hereinafter, referred to as "series capacitor") C2 and an inductor L1 is given a function of the preheating circuit 5. Specifically, as shown in Fig. 29, the inductor L1 is provided with three secondary windings, and one secondary winding out of these secondary windings has one end connected to the ground and the other end connected to a zero cross input terminal Vzc of a driving device 1 through a resistor R107. The remaining two secondary windings are connected between both ends of one each filament of the discharge lamp La as a series circuit with the capacitor, respectively. Further, the parallel capacitor C1 is connected to the ground through a detection resistor R2, and a connection point with the parallel capacitor C1 and the detection resister R2 is connected to an inversion side input terminal OPin- of the driving device 1 through a resister R107. Further, a terminal a is connected with one end of the DC lighting light source 9 is provided at a connection point with the parallel capacitor C1 and the series capacitor C2, and terminals b and g connected with the other end of the DC lighting light source 9 are provided at the connection point with the parallel capacitor C1 and the detection resister R2 and at the connection point with the series capacitor C2 and the discharge lamp La, respectively. That is, in a state of being connected with the DC lighting light source 9, the parallel circuit with the parallel capacitor C1 and the series capacitor C2 is connected in parallel to the DC lighting light source 9, thereby performing the same function as a capacitor C5 of the preheating circuit 5 in the sixth embodiment.

Further, in the sixth embodiment, the input voltage to a setting terminal Vsel is changed over in accordance with the presence or absence of the connection of the DC lighting light source 9, whereas in the present embodiment, the input voltage to a setting terminal Vsel is changed over in accordance with the presence or absence of the connection of the discharge lamp La to terminals c to f for the discharge lamp. To describe more in details, a load discrimination circuit 13b is connected to a DC power source 2 through an appropriate impedance 13a instead of being connected to the terminal a for the DC lighting light source, and at the same time, is connected to a detection resister R2 through one filament of the discharge lamp La. Further, the setting terminal Vsel is connected directly to a zener diode ZD1.

If the discharge lamp La is not connected, the input voltage to the setting terminal Vsel becomes higher than a sixth reference voltage Vref6, and the output of a setting part 108 becomes an L level. Further, if the discharge lamp La is connected, the series circuit with the filament of the discharge lamp La and the detection resister R2 is connected in parallel to the load discrimination circuit 13b, so that the output voltage of the load discrimination circuit 13b is reduced. As a result, the input voltage to the setting terminal Vsel becomes lower than the sixth reference voltage Vref6, and the output of the setting part 108 becomes an H level.

### (Ninth Embodiment)

A basic configuration of the present embodiment is common to the seventh embodiment, and therefore, the description of the portions common to each other will be omitted.

An optical output control circuit 11 of the present embodiment generates an output in accordance with a dimming control signal inputted from the outside similarly to the illumination device described in Fig. 22 in the fourth embodiment.

Further, in the present embodiment, as shown in Fig. 30, a discharge lamp detection circuit 14 is provided, which determines whether a discharge lam La is connected to terminals c to f for the discharge lamp. Further, a setting circuit Vsel is connected to a reference voltage terminal Vreg through a resister R108, and at the same time, is connected to the ground through a series circuit of two resistors R109 and R110. Further, a setting switching element Q109 has one end connected to the ground, and has the other end connected to a connection point of the two resisters R109 and R110, the setting switching element Q109 being turned on by the output of a load discrimination circuit 13b when a DC lighting light source 9 is not connected. Further, a switching element Q110 for stopping is provided, whose one end is connected to a setting terminal Vsel and the other end thereof is connected to the ground. The discharge lamp detection circuit 14 turns on the switching element Q110 for stopping when it is determined that the discharge lamp La is connected, and turns off the switching element Q110 for stopping when it is determined that the discharge lamp La is not connected. Further, the driving device 1, as shown in Fig. 31, is provided with a comparator CP105 for stopping whose non-inversion input terminal is connected to the setting terminal Vsel and the inversion input terminal thereof is inputted with a predetermined ninth reference voltage Vref9, and a stopping control part 110 for stopping the driving of the switching elements Q1 and Q2 when the output of the comparator CP105 for stopping is set at an H level before on-off driving of the switching elements Q1 and Q2 of a switching circuit 3 is started. Since the discharge lamp detection circuit 14 and the stopping control part 110 as described above can be realized by the known technology, the detailed illustration and the description thereof will be omitted.

An operation of the present embodiment will be described. In a period when the DC lighting light source 9 is not connected and the discharge lamp La is connected, the switching element Q110 for stopping is turned on, so that the setting terminal Vsel is connected to the ground, and the output of a setting part 108 becomes an H level. As a result, the operation of the driving device 1 becomes an operation for the discharge lamp, and the stopping control part 110 does not operate.

Further, in a period when the discharge lamp La is not connected and the DC lighting light source 9 is connected, both the switching element Q110 for stopping and the setting switching element Q109 are turned off. That is, the input voltage to the setting terminal Vsel becomes the highest and the output of a setting part 108 becomes an L level, thereby the operation of the driving device 1 becomes an operation for the DC lighting light source. At this time, though the output of the comparator CP105 for stopping becomes an H level, the stopping control part 110 is configured not to be operated, for example, by an AND circuit (not shown) in a period when the output of the setting part 108 is set at an L level.

Further, in a period when any of the discharge lamp La and the DC lighting light source 9 is not connected, the switching element Q110 for stopping is turned off, and the setting switching element Q109 is turned on. Thereby, the input voltage to the setting terminal Vsel becomes an intermediate voltage of the above two periods whose reference voltage is divided by the resistors R108 and R109. At this time, the output of the setting part 108 becomes the H level, and respective reference voltages Vref6 and Vref9 and the resistance values of respective resisters R108 and R109 are decided respectively so that the output of the setting part 108 becomes the H level, and the output of the comparator CP105 for stopping becomes the H level, respectively. Consequently, the respective switching elements Q1 and Q2 of the switching circuit 3 are stopped by the operation of the stopping control part 110.

### (Tenth embodiment)

A basic configuration of the present embodiment is common to the eighth embodiment, and therefore, the description of the portions common to each other will be omitted.

In the present embodiment, as compared with the eighth embodiment, the resistor R1, which is interposed between the second switching element Q2 and the ground, and the resistor R105, which is interposed between the resistor R1 and the inversion side terminal OPin-, are omitted as shown in Fig. 32.

Further, out of terminals a, b and g to which the DC lighting light source 9 is connected, terminals c and e used for the discharge lamp are shared in place of providing two terminals b and g at the low voltage side for exclusive use of the DC lighting light source 9. In other words, in a state where the DC lighting light source 9 is connected, the two terminals c and e which are shared are short-circuited out of the terminals c to f used for the discharge lamp.

In addition, one end of the parallel capacitor C1 is not connected to a connection point of the series capacitor C2 and the inductor L1 but connected between the terminal c, which is connected to the discharge lamp La, and the series capacitor C2. That is, as opposed to the eighth embodiment in which the DC lighting light source 9 is connected in parallel to the parallel circuit made of the parallel capacitor C1 and the series capacitor C2, the present embodiment is realized by connecting the DC lighting light source 9 in parallel to only the series capacitor C2, wherein both ends of the parallel capacitor C1 are short-circuited in a state of being connected with the DC lighting light source 9.

If respective circuit parts that constitute the resonance circuit 4 along with the discharge lamp La are stored in a case 15 as shown in Fig. 33 together with other circuit parts of the driving device 1 and the like, the case 15 is provided with a first connection part 15a used for connecting an electric wire to the terminal a for exclusive use of the DC lighting light source, a second connection part 15b used for connecting an electric wire to each of the terminals e and f connected to one end of the discharge lamp La, and a third connection part 15c used for connecting an electric wire to each of the terminals c and d connected to the other end of the discharge lamp La. Each of the connection parts 15a to 15c is connected to one end of the electric wire (not shown). As the connection parts 15a to 15c, a known quick connection terminal may be used and a receptacle (not shown) which constitutes a known connector along with a plug (not shown) arranged in one end of the electric wire by inserting and connecting the plug thereto may also be used.

The above case 15 constitutes an illumination fixture 16 by being stored and held in a fixture main body 16a as shown in Fig. 34. The illumination fixture 16 shown in Fig. 34 has a so-called Mt. Fuji like or trapezoidal shape corresponding to the discharge lamp La of a straight tube type and the DC lighting light source 9 of a corresponding shape. To describe more in detail, the fixture main body 16a has a triangular prism shape as a whole with one of side surfaces fixed to a mounting surface such as ceiling surface and other two side surfaces set to, for example, a white color so as to distribute light of the discharge lamp La and the DC lighting light source 9. Further, both end parts of a side (or ridge line) on the opposite side of the above one side surface directed to the mounting surface are provided with sockets 16b that are electrically and mechanically connected to bases arranged in both ends of the discharge lamp La. The respective sockets 16b are electrically connected to the second connection part 15b and the third connection part 15c, and the respective bases of the discharge lamp La are connected to the sockets 16b, whereby the discharge lamp La is connected electrically to other circuit parts of the resonance circuit 4.

In the discharge lamp La of a straight tube type which is connected to the illumination fixture 16 as described above, one of the bases thereof is provided with two terminal pins (not shown) in one to one correspondence to the two terminals e and f corresponding to the second connection part 15b, and the other base thereof is provided with two terminal pins (not shown) in one to one correspondence the two terminals c and d corresponding to the third connection part 15c.

Then, the DC lighting light source 9 connected to the illumination fixture 16 as described above has a shape corresponding to the discharge lamp La of a straight tube type as shown in Fig 35 and is provided with a case 92 of a cylindrical shape for storing each of the light emitting diodes 91. Arranged in both ends of the case 92 in the axial direction are bases 93 each of which has two terminal pins including 93c to 93f in the same manner with the bases of the discharge lamp La of a straight tube type. Out of the terminal pins 93c to 93f, two of the terminal pins 93c and 93e, which are to be connected to the terminals c and e, are short-circuited to each other and connected to one end of the series circuit made of the light emitting diodes 91, respectively. The other two terminal pins 93d and 93f are used exclusively for mechanical connection to the sockets 16b without electrical connection to the light emitting diodes 91. As a means adapted to connect the other end of the series circuit made of the light emitting diodes 91 to the first connection part 15a, for example, a known connector (not shown) can be used, wherein parts held in the illumination fixture 16 may be held by the fixture main body 16a and may also be held by the sockets 16b. If the connecting configuration is partially shared by the discharge lamp La and the DC lighting light source 9 as described above, as compared to the case where the connecting configuration is not shared by the discharge lamp La and the DC lighting light source 9, necessary changes can be minimized in adapting the DC lighting light source 9 to a conventional general illumination fixture for exclusive use of the discharge lamp La.

### (Eleventh embodiment)

A basic configuration of the present embodiment is common to the tenth embodiment, and therefore, the description of the portions common to each other will be omitted.

In the present embodiment, as shown in Fig. 36 and Fig. 37, the resistor R107 which was connected to the inversion side terminal OPin- in the tenth embodiment is integrated in the driving device 1. Accordingly, the driving device1 is provided with, separately from the inversion side terminal OPin- to which the capacitor C105 is connected, a current detection terminal CSin connected to the resistor R107.

Further, in the driving device 1, the second OR circuit OR02 has three inputs, and there are additionally provided with a resistor R111 whose one end is connected to the current detection terminal CSin and a comparator CP106 with a non-inversion input terminal connected to the other end of the resistor R111 and an inversion input terminal inputted with a tenth reference voltage Vref10. The second OR circuit OR02 with three inputs is also inputted with an output of the above comparator CP106. That is, if a current value of the switching current exceeds a predetermined value corresponding to the tenth reference value Vref10, the output of the above comparator CP106 and the output of the second OR circuit OR02 become an H level respectively, whereby the first switching element Q1 is turned off. Therefore, even if, for example, a short circuit occurs between both ends of the DC lighting light source 9, it is possible to prevent the switching current from excessively flowing.

Meanwhile, in the driving device 1, the first driving circuit 106a for driving the first switching element Q1 uses the externally attached capacitor C103 as a power source. Then, in a period when a current flows through a loop composed of the parasitic diode of the second switching element Q2 and the resonance circuit 4, the potential in a connection point of the first switching element Q1 and the second switching element Q2 (or the potential of the intermediate terminal Hgnd and hereinafter, referred to as "intermediate potential") substantially coincides with the ground. If the intermediate potential is thus obtained in a sufficiently low state relative to the potential of the power source terminal Vcc, the above capacitor C103 is charged by the charge current flowing from the power source terminal Vcc to the diode D101 provided in the driving device 1. However, during operation in a state of being connected with the DC lighting light source 9 as explained in the fifth embodiment, the second switching element Q2 is maintained in an off-state, and if the intermediate potential becomes the potential of the power source terminal Vcc or higher due to some reasons, the above charge current stops flowing and it is therefore possible to consider a case where a voltage between both ends of the above capacitor C103 becomes insufficient. Therefore, as shown in Fig. 38, during operation in a state of being connected with the DC lighting light source 9, and in a period when the first switching element Q1 is turned off, the second switching element Q2 may be turned on appropriately. In this case, irrespective to the on-duty of the first switching element Q1, in order to certainly avoid the first switching element Q1 and the second switching element Q2 are turned on simultaneously, the timing to on-control the second switching element Q2 is set to be later than the timing to off-control the first switching element Q1 and a period of time tp to maintain the second switching element Q2 in an on-state is made sufficiently short relative to a shortest period of time assumed in a period of time to maintain the first switching element Q1 in an off-state. For example, if the above capacitor C103 has capacitance of 0.1µF, the impedance in a charging path of the above capacitor C103 as a whole has a maximum value of 10Ω, and the frequency to turn on/off the first switching element Q1 falls in the level of 40kHz (or in the period of 25µs), the period of time tp to maintain the second switching element Q2 in an on-state is fixed to 1µs. The operation as described above can be realized by providing an appropriate logic circuit and a delay circuit in the driving device 1, and therefore detailed drawing and explanation thereof will be omitted.

### [Description of Reference Numerals]

- 1: Driving device
- 2.: DC power source
- 3: Switching circuit (a part of the lighting circuit in claims)
- 4: Resonance circuit (a part of the lighting circuit in claims)
- 5: Preheating circuit (a part of the lighting circuit in claims)
- 8: Load circuit (a part of the lighting circuit in claims)
- 9: DC lighting light source
- 103: Oscillation part
- 104: Second control part (operation changeover means in claims)
- 105a: First drive signal generation circuit
- 105b: Second drive signal generation circuit
- 106: Driving part
- C101: Oscillation capacitor
- C104: Capacitor for time delay generation
- CP102: Comparator (output circuit in claims)
- CSin: Current input terminal
- Hout: First output terminal
- Iref1: Constant current source (a part of charging and discharging circuit in claims)
- La: Discharge lamp
- Lout: Second output terminal
- OPin-: Inversion side terminal (current detection means in claims)
- Q1: First switching element
- Q2: Second switching element
- Q105: Switching element (a part of charging and discharging circuit in claims)
- R1: Detection resistor (current detection means in claims)
- R2: Detection resistor (current detection means in claims)
- Vsel: Setting terminal

## Claims

1. A driving device for a lighting circuit for periodically on-off driving a switching element in a lighting circuit for lighting an electric light source, comprising:
an output terminal connected to the switching element; and a setting terminal inputted with an electric signal instructing a type of operation, wherein:
an output to an output terminal is alternately switched for one of a DC lighting light source and one of a discharge lamp in accordance to an electric signal inputted to the setting terminal.

2. The driving device for the lighting circuit according to claim 1, comprising:
two output terminals;
an oscillation part having an oscillation capacitor and outputting a rectangular wave having an on-duty fixed to 50% by switching the charging and discharging current of an oscillation capacitor in accordance with a voltage betweenboth the ends of the oscillation capacitor, and switching a level of an output;
two drive signal generation circuits for outputting the rectangular wave having one to one correspondence with an output level of the oscillation part and having one to one correspondence with the output terminal; and
a driving part for on-off driving each switching element such that the switching element connected to the output terminal corresponding to the drive signal generation circuit whose output is set at an H level is on controlled and the switching element connected to the output terminal corresponding to the drive signal generation circuit whose output is set at an L level is off controlled, wherein :
each drive signal generation circuit comprises: a capacitor for time delay generation; a charging and discharging circuit starting the charging of the capacitor for time delay generation when an output level of the oscillation part is one output level and becomes a different one output level for each drive signal generation circuit, and discharging the capacitor for time delay generation in a period when the output level of the oscillation part is the other output level; and an output circuit for setting an output at an H level in period from the time when a voltage between both the ends of the capacitor for time delay generation increases and reaches a predetermined voltage until the output level of the oscillation part becomes the other output level, and setting the output at an L level in the other period, respectively,
the driving device for lighting circuit further comprising: an operating switching means adapted to change at least one of the charging and discharging current of the oscillation capacitor in the oscillation part and the charging current of the capacitor for time delay generation in each drive signal generation circuit in accordance with the electric signal inputted to the setting terminal.

3. An illumination device, comprising:
a driving device for the lighting circuit according to claim 1 or 2; and
a lighting circuit including a switching element periodically on-off driven by the driving device for the lighting circuit and supplying a lighting power to an electric light source.

4. The illumination device according to claim 3, wherein:
the lighting circuit converts DC power supplied from the DC power source into power used for lighting an electric light source, comprising a series circuit made of two switching elements to be connected between output ends of the DC power source and on-off driven by the driving part, and a current detection means adapted to detect a switching current being a current flowing through one of the two switching elements;
the driving device has a current input terminal inputted with an output of the current detection means; and
the oscillation part changes an output frequency in accordance with an input from the current input terminal.
